(19) Europäisches Patentamt / European Patent Office / Office européen des brevets

(11) **EP 2 655 573 B1**

(12) **FASCICULE DE BREVET EUROPEEN**

(45) Date de publication et mention de la délivrance du brevet: **25.01.2017 Bulletin 2017/04**

(21) Numéro de dépôt: **11797326.3**

(22) Date de dépôt: **19.12.2011**

(51) Int Cl.: ***C10L 1/10*** (2006.01) ***C10L 10/06*** (2006.01) ***B01J 13/00*** (2006.01)

(86) Numéro de dépôt international: **PCT/EP2011/073266**

(87) Numéro de publication internationale: **WO 2012/097937 (26.07.2012 Gazette 2012/30)**

(54) **ADDITIF CARBURANT À BASE D'UNE DISPERSION DE PARTICULES DE FER ET D'UN DÉTERGENT POLYESTER AMMONIUM.**

EISENTEILCHENDISPERSION UND AMMONIUMPOLYESTERREINIGUNGSMITTEL ENTHALTENDER KRAFTSTOFFZUSATZ.

FUEL ADDITIVE CONTAINING AN IRON-PARTICLE DISPERSION AND AN AMMONIUM POLYESTER DETERGENT.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010 FR 1061063**

(43) Date de publication de la demande: **30.10.2013 Bulletin 2013/44**

(73) Titulaires:
- **Rhodia Operations**
  **93306 Aubervilliers (FR)**
- **The Lubrizol Corporation**
  **Wickliffe, Ohio 44092 (US)**

(72) Inventeurs:
- **D'ALENCON, Lauriane**
  **F-75014 Paris (FR)**
- **LALLEMAND, Michael**
  **F-93200 Saint Denis (FR)**
- **HARLE, Virginie**
  **F-60300 Senlis (FR)**
- **MORETON, David J.**
  **Belper DE56 1QN (GB)**
- **MACDUFF, Malcolm G.J.**
  **Belper DE56 1QN (GB)**
- **PUDLARZ, Magali**
  **Belper DE56 1QN (GB)**
- **GREENFIELD, Hannah**
  **Belper DE56 1QN (GB)**
- **THETFORD, Dean**
  **Blackley**
  **Manchester M9 8ZS (GB)**
- **JONES, Joanne L.**
  **Belper DE56 1QN (GB)**

(74) Mandataire: **Lavoix**
**2, place d'Estienne d'Orves**
**75441 Paris Cedex 09 (FR)**

(56) Documents cités:
**EP-A1- 1 512 736**
**WO-A1-2008/116552**
**WO-A1-2009/140190**
**WO-A1-2010/012756**
**FR-A1- 2 833 862**
**FR-A5- 2 119 583**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 655 573 B1

Printed by Jouve, 75001 PARIS (FR)

## Description

La présente invention concerne l’association d’une dispersion organique de particules de fer et d’un détergent au sein d’une composition notamment utile comme additif carburant pour moteurs à combustion interne.

Lors de la combustion de carburant, notamment de gazole, dans un moteur, les produits carbonés ont tendance à former des particules carbonées, qu’on désignera dans la suite de la description sous l’expression de "suies", qui sont réputées nocives tant pour l’environnement que pour la santé. On recherche depuis longtemps des techniques qui permettent de réduire l’émission de ces suies.

Une solution satisfaisante consiste à introduire dans la ligne d’échappement un filtre à particules (ou FAP dans la suite du texte) qui va bloquer les suies dans ses canaux pour laisser échapper un gaz exempt de suies. Lorsqu’une certaine quantité de suies accumulées dans le FAP est atteinte, les suies sont brûlées pour libérer les canaux du FAP. Cette étape de régénération du FAP se fait habituellement à des températures supérieures à la température du gaz pendant une marche normale du moteur, les suies brûlant usuellement sous air à des températures supérieures à 650°C.

Afin d’aider à la régénération du FAP, on emploie généralement un catalyseur qui a pour but de faciliter l’oxydation des suies directement ou indirectement. On entend par faciliter l’oxydation des suies le fait de permettre leur oxydation à plus basse température de façon à ce que cette température soit plus fréquemment atteinte pendant une marche normale du moteur. Une partie des suies peut ainsi être brûlée en continu pendant le fonctionnement du moteur.

Le catalyseur permet aussi d’abaisser la température requise pour régénérer le FAP afin que la température de régénération soit inférieure à la température de combustion des suies sans la présence du dit catalyseur. Le catalyseur permet également d’accélérer la vitesse d’oxydation des suies, ce qui permet de réduire la durée nécessaire à la régénération du FAP.

L’utilisation d’un additif d’aide à la régénération du FAP, vectorisé par le carburant alimentant le moteur ou encore Fuel Borne Catalyst (FBC), s’est avéré répondre à de nombreux critères puisqu’il permet de régénérer le FAP plus rapidement et à plus basse température que la technologie concurrente appelée Catalysed Soot Filter (CSF, le catalyseur étant immobilisé dans le FAP), ce qui contribue à réduire la consommation en carburant pour la régénération du FAP (et ainsi réduire les émissions de $CO_2$).

Les nouvelles technologies moteur, comme les moteurs diesel à système common-rail et injection directe haute pression de carburant, sont performantes mais toutefois sensibles à la qualité du carburant. Il est notamment connu que des dépôts peuvent se former notamment dans les injecteurs des moteurs diesel au cours de leur fonctionnement. La quantité de dépôt et leur vitesse de formation dépendent de la qualité du carburant utilisé dans le moteur mais aussi de la nature des additifs carburants présents dans celui-ci.

On entend ici par « additif carburant » tout additif permettant l’amélioration de la distribution du carburant dans le moteur et/ou l’amélioration des performances de fonctionnement du moteur et/ou l’amélioration de la stabilité du fonctionnement du moteur dans le temps. Les carburants qui contiennent des composants instables, comme les esters méthyliques d’acides gras généralement présents dans les biocarburants, ont tendance à former plus de dépôt que les carburants minéraux n’en contenant pas.

De plus, la présence de certains métaux dans les carburants comme le cuivre ou le zinc peuvent conduire à des quantités de dépôt accrues et ainsi des niveaux d’encrassement des injecteurs exacerbés. Les métaux présents dans les carburants proviennent de différentes origines comme les métaux provenant du contact entre le carburant et le réseau de distribution du carburant ou de toute autre contamination. Des métaux peuvent aussi être délibérément introduits dans le carburant comme dans le cas des additifs métalliques d’aide à la régénération du FAP. Même si ces additifs sont bénéfiques pour la régénération du FAP et sont ainsi souhaitables, certains peuvent promouvoir la formation de dépôt dans le circuit carburant et tout particulièrement dans les injecteurs carburant.

Les dépôts peuvent conduire à une perte de puissance du moteur et peuvent éventuellement aller jusqu’à endommager le moteur. Ces dépôts peuvent aussi dégrader la qualité de la combustion dans les cylindres et conduire à une augmentation des émissions polluantes et de la consommation du moteur en carburant. Il est connu que les additifs détergent réduisent ou éliminent la formation de dépôt dans les injecteurs.

Parmi les additifs carburant d’aide à la régénération du FAP, les dispersions de terres rares, notamment à base de cérium, et/ou de fer sont connues pour être efficaces pour la régénération du FAP et contribuent à la réduction de la température d’oxydation des suies. Ces dispersions doivent présenter une bonne dispersibilité dans le carburant dans lequel elles sont introduites, une stabilité élevée dans le temps et une activité catalytique suffisante à une concentration relativement peu élevée.

Les dispersions connues à ce jour ne satisfont pas toujours à tous ces critères. Elles peuvent présenter par exemple une bonne dispersibilité mais pas une stabilité suffisante, notamment lorsqu’elles sont introduites dans des carburants contenant des esters méthyliques d’acides gras ou autre carburant d’origine végétale facilement oxydable. Ces dispersions peuvent être suffisamment stables mais présenter une activité catalytique à des concentrations en métal trop élevées pour qu’elles soient économiquement intéressantes. Par ailleurs comme indiqué précédemment, toutes ces dispersions doivent avoir un impact limité sur le fonctionnement des injecteurs carburants, notamment conduire

à un encrassement limité de ceux-ci, même en présence d'un carburant contenant du biocarburant ou encore un carburant contenant des métaux. De plus, la présence d'un FBC dans le carburant peut conduire à réduire la résistance du carburant à l'oxydation, notamment lorsqu'il contient des biocarburants.

Le document WO 2009/140190 divulgue une composition comprenant une dispersion et un détergent comprenant un sel d'ammonium quaternaire, ladite dispersion comprenant : une phase organique; au moins un agent amphiphile, et des particules dispersées dans la phase organique, de dimensions colloïdales; cette composition améliore le contrôle des dépôts et la combustion de moteurs à combustion interne.

On cherche donc à fournir des compositions comprenant un additif d'aide à la régénération du FAP avec une bonne stabilité et qui conduisent à un faible encrassement des injecteurs et une réduction limitée de la résistance à l'oxydation du carburant, notamment en présence de biocarburant.

On cherche de préférence à fournir des compositions comprenant un additif présentant une activité catalytique suffisante à une concentration relativement peu élevée.

Un but de l'invention est de fournir une composition bien adaptée à ce type d'utilisation.

Dans ce but, l'invention propose une composition contenant un additif d'aide à la régénération du FAP sous la forme d'une dispersion organique de particules de fer et d'un détergent comprenant un sel d'ammonium quaternaire.

La dispersion comprend des particules d'un composé du fer de petite taille et au moins un agent amphiphile.

Dans certains cas, le détergent peut en outre de plus inclure un détergent oxygéné.

L'invention fournit également un carburant additivé comprenant un carburant et la composition précédemment décrite.

Plus précisément, l'invention concerne une composition comprenant une dispersion et un détergent comprenant un sel d'ammonium quaternaire de polyester, ladite dispersion comprenant :

- une phase organique ;
- au moins un agent amphiphile, et
- des particules dispersées dans la phase organique, de dimensions colloïdales, constituées d'un composé du fer.

La dispersion organique

Les particules dispersées dans les dispersions de l'invention sont des particules solides de dimensions colloïdales individualisées, ou des agrégats de telles particules. Lesdites particules peuvent, en outre, éventuellement contenir des quantités résiduelles d'ions liés ou adsorbés tels que par exemple des ions sodium, des ions nitrate ou des ions ammonium.

Par dimensions colloïdales, on entend des dimensions comprises entre environ 1 nm et environ 200 nm. Les particules peuvent plus particulièrement présenter une taille moyenne d'au plus 100 nm, de préférence d'au plus 20 nm et encore plus préférentiellement d'au plus 15 nm. On notera que dans de telles dispersions, le composé de l'additif peut se trouver soit, de préférence, totalement sous la forme de colloïdes, soit sous la forme de colloïdes et partiellement sous la forme d'ions.

La granulométrie dont il est fait état ci-dessus est déterminée par microscopie électronique à transmission (MET), de manière classique, sur un échantillon préalablement séché et déposé sur une membrane de carbone supportée sur une grille de cuivre.

La dispersion de la composition de l'invention est une dispersion en phase organique.

A cet effet, le plus souvent, la phase organique est constituée d'au moins 80%, de préférence au moins 90%, de préférence au moins 95% en masse d'un solvant organique ou d'un mélange de solvants organiques, par rapport à la masse totale de la phase organique.

La phase organique est éventuellement constituée uniquement d'un solvant organique ou d'un mélange de solvant organiques.

Cette phase organique est choisie notamment en fonction de l'utilisation de la dispersion.

A titre d'exemple de phase organique, on peut citer les hydrocarbures aliphatiques comme l'hexane, l'heptane, l'octane, le nonane, les hydrocarbures cycloaliphatiques tels que le cyclohexane, le cyclopentane, le cycloheptane, les hydrocarbures aromatiques tels que le benzène, le toluène, l'éthylbenzène, les xylènes, les naphtènes liquides. Conviennent également les coupes pétrolières du type Isopar ou Solvesso (marque déposée par la Société EXXON), notamment Isopar L ou Solvesso 100 qui contient essentiellement un mélange de méthyléthyl- et triméthyl-benzène, le Solvesso 150 qui renferme un mélange d'alkylbenzènes en particulier de diméthylbenzène et de tétraméthylbenzène. La phase organique peut aussi être constituée d'une coupe pétrolière.

On peut mettre en oeuvre également pour la phase organique des hydrocarbures chlorés polaires tels que le chloro- ou le dichloro-benzène, le chlorotoluène. Les éthers ainsi que les cétones aliphatiques et cycloaliphatiques comme par exemple l'éther de diisopropyle, l'éther de dibutyle, la méthylisobutylcétone, la diisobutylcétone, l'oxyde de mésityle, peuvent être envisagés.

On peut également envisager des solvants polaires à base d'alcool comme le 2-éthylhexanol.

La phase organique peut aussi être avantageusement à base d'un hydrocarbure apolaire notamment comme les hydrocarbures aliphatiques.

On peut citer dans cette catégorie préférée les coupes pétrolières du type Isopar, contenant essentiellement des hydrocarbures isoparaffiniques et parraffiniques en $C_{11}$ et $C_{12}$.

La dispersion selon l'invention comporte au moins un agent amphiphile.

Cet agent amphiphile a pour effet de stabiliser la dispersion de particules. Il sert également d'agent de transfert de phase lors de la préparation des dispersions (entre la phase aqueuse et la phase organique).

De préférence, l'agent amphiphile est un acide carboxylique qui comporte généralement de 10 à 50 atomes de carbone, de préférence de 10 à 25 atomes de carbone.

Cet acide peut être linéaire ou ramifié. Il peut être choisi parmi les acides aryliques, aliphatiques ou arylaliphatiques, portant éventuellement d'autres fonctions à condition que ces fonctions soient stables dans les milieux où l'on désire utiliser les dispersions selon la présente invention.

Ainsi, on peut mettre en oeuvre par exemple des acides carboxyliques aliphatiques, qu'ils soient naturels ou synthétiques. Il est bien entendu possible d'utiliser des acides en mélange.

A titre d'exemple, on peut citer les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2-hexanoïque, l'acide naphténique, l'acide hexoïque.

A titre d'agent amphiphile préféré, on peut citer l'acide stéarique et ses isomères comme par exemple un mélange d'acides ou des produits qui contiennent des distributions en longueur de chaîne comme la Prisorine 3501 de Croda.

Cet agent amphiphile peut également être composé d'un ou plusieurs polyacides comme les acides succiniques substitués par des groupements polybutén判. Ces polyacides peuvent être utilisés seuls ou en combinaison avec un ou plusieurs acides monocarboxyliques aliphatiques contenant entre 10 et 20 atomes de carbone en moyenne.

A titre d'exemple, on peut citer le mélange acide oléique avec un ou plusieurs acides succiniques substitués par des groupements polybuténіyl, dans lesquels les groupements polybuténіyl ont un poids moléculaire moyen (mesuré par chromatographie en phase gazeuse) compris de 500 et 1300 et plus particulièrement entre 700 et 1000 $g.mol^{-1}$.

Selon un premier mode de l'invention, la dispersion de la composition comprend des particules constituées d'un composé du fer sous forme amorphe.

Des dispersions de particules de fer de ce type sont par exemple décrites dans WO 2003/053560. On pourra donc se référer à l'ensemble de la description de ce document. Les caractéristiques des dispersions qui y sont décrites vont être rappelées ci-dessous.

Dans ces dispersions le caractère amorphe d'un composé du fer peut être mis en évidence par analyse de Diffraction des Rayons X (ou DRX), les diagrammes de diffraction des Rayons X obtenus ne montrent en effet aucun pic significatif caractéristique d'une phase cristalline du fer.

Selon une variante de cette dispersion, au moins 85%, plus particulièrement au moins 90% et encore plus particulièrement au moins 95% des particules sont des particules primaires. On entend par particule primaire une particule qui est parfaitement individualisée et qui n'est pas agrégée avec une autre ou plusieurs autres particules. Cette caractéristique peut être mise en évidence en examinant la dispersion par MET.

On peut aussi utiliser la technique de cryo-MET pour déterminer l'état d'agrégation des particules élémentaires. Elle permet d'observer par microscopie électronique à transmission (MET) des échantillons maintenus congelés dans leur milieu naturel qui est soit de l'eau soit des diluants organiques tels que les solvants aromatiques ou aliphatiques comme par exemple le Solvesso et l'Isopar ou bien certains alcools tels que l'éthanol.

La congélation s'effectue sur des films minces d'environ 50 nm à 100 nm d'épaisseur soit dans l'éthane liquide pour les échantillons aqueux soit dans l'azote liquide pour les autres.

Par cryo-MET, l'état de dispersion des particules est bien préservé et représentatif de celui présent dans le milieu réel.

Les particules de cette même dispersion colloïdale peuvent présenter une granulométrie fine. En effet, elles possèdent un $\Phi_{50}$ compris entre 1 nm et 5 nm, plus particulièrement entre 3 nm et 4 nm.

Le diamètre médian en nombre $\Phi_{50}$ est le diamètre tel que 50% des particules comptées sur les clichés de MET ont un diamètre plus petit que cette valeur, et 50% des particules comptées ont un diamètre plus grand que cette valeur.

Selon un deuxième mode de l'invention, la dispersion de la composition comprend des particules constituées d'un composé du fer sous forme cristallisée.

Une dispersion de particules de fer sous forme cristallisée peut être préparée selon un procédé comportant les étapes suivantes :

a) mise en contact, en phase aqueuse, d'une base et d'un mélange comprenant un sel de Fe(II) et un sel de Fe(III),

selon un rapport molaire Fe(II)/Fe(III) compris de 0,45 à 0,55, de préférence environ égal à 0,5, avantageusement égal à 0,5, en maintenant le pH de la phase aqueuse à une valeur de pH supérieure à 8, ce par quoi on obtient un précipité ; et

b) mise en contact du précipité ainsi obtenu, éventuellement séparé de la phase aqueuse, avec une phase organique à base d'un solvant organique, en présence d'un agent amphiphile, ce par quoi on obtient la dispersion en phase organique.

Cette forme cristallisée, qui peut être obtenue par la mise en oeuvre des étapes du procédé précité, peut notamment être observée par la technique de diffraction des rayons X (DRX) qui met en évidence des pics caractéristiques d'au moins une structure cristallisée définie du fer.

Les particules de la dispersion de l'invention sont sous forme de particules individualisées, ou d'agrégats de telles particules, d'un composé du fer dont la composition correspond essentiellement à un oxyde de fer sous forme cristallisée.

Les formes cristallisées de l'oxyde de fer constituant les particules selon ce deuxième mode sont typiquement les oxydes de Fe(III) de type maghémite ($\gamma$-$Fe_2O_3$) et/ou des oxydes de Fe(II) et Fe(III) de type magnétite ($Fe_3O_4$).

Le procédé précité permet généralement d'obtenir des particules à base d'oxyde de Fe(III) de type maghémite et/ou d'oxyde de Fe(II) et Fe(III) de type magnétite, la magnétite pouvant ensuite s'oxyder en oxyde de Fe(III) de type maghémite par exemple au contact de l'oxygène.

De préférence, selon une variante particulière de ce deuxième mode, les particules de taille supérieure ou égale à 4 nm dans la dispersion sont, pour au moins 90% d'entre elles, sous la forme d'un composé du fer sous forme cristallisée, avantageusement au moins 95%, préférentiellement au moins 99%.

Selon une autre caractéristique de ce deuxième mode, la taille moyenne $\overline{D}_{DRX}$ des particules de la dispersion, mesurée par diffraction des rayons X (DRX), est inférieure ou égale à 12 nm.

De préférence, selon ce deuxième mode, la taille moyenne $\overline{D}_{DRX}$ mesurée par DRX des particules de la dispersion est inférieure ou égale à 8 nm, de préférence inférieure ou égale à 7 nm, préférentiellement inférieure ou égale à 6 nm et avantageusement inférieure ou égale à 5 nm.

Généralement cette taille est d'au moins 4 nm.

Le caractère cristallisé des particules selon ce deuxième mode peut être notamment mis en évidence par analyse de DRX. Le diagramme de DRX permet de définir deux caractéristiques de ces particules :

- la nature de la phase cristalline : la position des pics de diffraction mesurés ainsi que leur intensité relative sont caractéristiques de la phase magnétite ou maghémite, la phase cristalline correspondant alors à la fiche ICDD 01-088-0315 ; et
- la taille moyenne $\overline{D}_{DRX}$ de cristallites (ou domaines cristallisés) : cette taille est calculée à partir de la largeur à mi hauteur du pic de diffraction du plan cristallographique (440) de la maghémite/magnétite :

$$\overline{D}_{DRX} = \frac{k \cdot \lambda}{\sqrt{H^2 - s^2} \cdot \cos\theta}$$

avec :

$\lambda$ : longueur d'onde = 1,54 Å,
k : facteur de forme égal à 0,89,
H : largeur totale à mi-hauteur de la raie considérée, exprimée en degrés,
s : largeur instrumentale à l'angle $\theta$ déterminée par analyse de $LaB_6$ = 0,072°,
$\theta$ angle de diffraction (en radian) du pic de diffraction (440) de la magnétite et/ou maghémite = 0,547 rad.

L'analyse DRX peut être par exemple réalisée sur un appareil commercial de type X'Pert PRO MPD PANalytical composé notamment d'un goniomètre $\theta$-$\theta$, permettant la caractérisation d'échantillons liquides. L'échantillon reste horizontal pendant l'acquisition et ce sont la source et le détecteur qui se déplacent.

Cette installation est pilotée par le logiciel X'Pert Datacollector fourni par le constructeur et l'exploitation des diagrammes de diffraction obtenus peut être réalisée à l'aide du logiciel X'Pert HighScore Plus version 2.0 ou supérieure (fournisseur PANalytical).

Quel que soit son mode de réalisation, selon une caractéristique préférentielle de l'invention, il est préférable que l'essentiel des particules, à savoir au moins 80% en nombre, présentent une taille $D_{MET}$ inférieure ou égale à 12 nm, plus particulièrement inférieure ou égale 8 nm, de préférence inférieure ou égale à 7 nm, préférentiellement inférieure

ou égale à 6 nm.

Typiquement, au moins 90% et plus particulièrement au moins 95% des particules présentent une taille $D_{MET}$ inférieure ou égale aux valeurs précitées.

Cette taille $D_{MET}$ peut être mise en évidence par analyse de la dispersion par microscopie électronique à transmission (MET), utilisée dans un mode imagerie permettant de visualiser à fort grossissement les particules et d'en mesurer leur taille.

De façon préférée et pour une meilleure précision de la mesure de la taille des particules, on peut procéder selon le protocole suivant.

La dispersion selon l'invention est préalablement diluée par son solvant de façon à atteindre une teneur massique en fer d'environ 0,035%. La dispersion ainsi diluée est alors disposée sur une grille d'observation (comme une membrane polymère carbonée supportée sur une grille de cuivre), et le solvant est évaporé.

On peut utiliser par exemple un microscope électronique à transmission donnant accès à des grandissements allant jusque 800 000, la tension d'accélération étant choisie de préférence égale à 120 kV.

Le principe de la méthode consiste à examiner sous microscope différentes régions (environ 10) et à mesurer les dimensions de 250 particules, en considérant ces particules comme des particules sphériques. Une particule est jugée comme identifiable lorsqu'au moins la moitié de son périmètre peut être défini. La taille $D_{MET}$ correspond alors au diamètre du cercle reproduisant correctement la circonférence de la particule. L'identification des particules exploitables peut se faire à l'aide d'un logiciel tel que : ImageJ, Adobe Photoshop ou Analysis.

On en déduit une répartition granulométrique cumulée des particules que l'on regroupe en 40 classes granulométriques allant de 0 à 20 nm, la largeur de chaque classe étant de 0,5 nm. Le nombre de particules dans chaque classe ou pour chaque $D_{MET}$ est la donnée de base pour représenter la répartition granulométrique différentielle en nombre.

En outre, les particules de la dispersion de l'invention présentent de préférence une granulométrie fine telle qu'observée par MET, qu'elles soient à base d'un composé du fer sous forme amorphe ou cristallisée.

Les particules de la dispersion selon le second mode de réalisation de l'invention possèdent un diamètre médian $\Phi_{50}$ compris de préférence entre 3 nm et 12 nm, plus particulièrement entre 4 nm et 10 nm.

Le diamètre médian en nombre $\Phi_{50}$ est le diamètre tel que 50% des particules comptées sur les clichés de MET ont un diamètre plus petit que cette valeur, et 50% des particules comptées ont un diamètre plus grand que cette valeur.

Les particules de la dispersion selon le second mode de réalisation de l'invention présentent de préférence un indice de polydispersité $P_n$ compris de 0,1 à 0,5.

Cet indice de polydispersité $P_n$ est calculé à partir de la répartition granulométrique en nombre déterminée par MET selon la formule suivante :

$$P_n = \frac{\Phi_{84} - \Phi_{16}}{2 \cdot \Phi_{50}}$$

$\Phi_{16}$ étant le diamètre pour lequel 16% des particules ont un diamètre inférieur à cette valeur, et le $\Phi_{84}$ étant le diamètre pour lequel 84% des particules ont un diamètre inférieur à cette valeur.

Les particules selon l'invention satisfaisant à ce critère présentent une bonne monodispersité.

L'état de dispersion des particules peut être caractérisé par la diffusion dynamique de la lumière (DDL), encore appelée diffusion quasi-élastique de lumière (DQEL), ou encore de spectroscopie de corrélation de photons. Cette technique permet de mesurer un diamètre hydrodynamique $D_h$ des particules dont la valeur est très fortement affectée par la présence d'agrégats de particules.

Selon une caractéristique préférentielle des particules selon le second mode de réalisation, ces particules présentent un diamètre hydrodynamique $D_h$ inférieur ou égal à 50 nm, de préférence inférieur ou égale à 30 nm, préférentiellement inférieur ou égal à 20 nm, mesuré par diffusion dynamique de la lumière (DDL).

Le diamètre hydrodynamique $D_h$ des particules d'une dispersion selon l'invention peut être mesuré sur la dispersion de l'invention, après dilution de celle-ci par son solvant de façon à atteindre une concentration en fer comprise de 1 à 4 $g.L^{-1}$.

On peut utiliser un appareil de diffusion de lumière de type ALV CGS 3 (Malvern) muni d'un corrélateur ALV série 5000 et du logiciel ALV Correlator V3.0 ou supérieure. Cet appareil utilise la méthode de traitement des données dite des « cumulants de Koppel », ce qui permet d'accéder à la valeur du diamètre hydrodynamique $D_h$.

Il est important de faire la mesure à la température (typiquement à 25°C) correspondant aux valeurs de viscosité et d'indice de réfraction utilisées pour le solvant dans le calcul du diamètre hydrodynamique et d'utiliser un angle de mesure fixé, typiquement à 90°.

Il est également recommandé d'effectuer les préparations de la dilution ainsi que les manipulations sous une

hotte à flux laminaire pour éviter la contamination des échantillons par des poussières et fausser la mesure.

On considère que les données expérimentales sont validées si l'intensité diffusée est stable et si la fonction d'autocorrélation est dépourvue d'anomalies.

Enfin, l'intensité diffusée doit être comprise dans des limites définies pour chaque appareil.

Cette caractéristique préférée des particules de la dispersion augmente sa stabilité. Le caractère individualisé des particules augmente également la surface globale de contact disponible entre celles-ci et les suies et contribue ainsi à l'amélioration de l'activité catalytique de la dispersion selon l'invention.

Selon un mode particulier de l'invention, la dispersion de la composition (DSP1) selon l'invention comprend :

- une phase organique ;
- au moins un agent amphiphile, et
- des objets solides dispersés dans la phase organique, sous forme de particules individualisées ou d'agrégats de particules, constitués d'un composé du fer sous forme cristallisée, tels que :
  - lesdites particules présentent une taille moyenne $\overline{D}_{DRX}$ inférieure ou égale à 7 nm mesurée par diffraction des rayons X (DRX) ; et
  - au moins 80% en nombre desdites particules présentent une taille $D_{MET}$ inférieure ou égale à 7 nm mesurée par microscopie électronique en transmission (MET).

Les objets solides de cette dispersion (DSP1) peuvent de préférence présenter un diamètre hydrodynamique $D_h$ inférieur ou égal à 30 nm mesuré par diffusion dynamique de la lumière (DDL).

Selon un autre mode particulier de l'invention, la dispersion de la composition (DSP2) selon l'invention comprend :

- une phase organique apolaire ;
- au moins un agent amphiphile, et
- des objets solides dispersés dans la phase organique, sous forme de particules individualisées ou d'agrégats de particules, constitués d'un composé du fer sous forme cristallisée, tels que :
  - lesdits objets solides présentent un diamètre hydrodynamique $D_h$ inférieur ou égal à 30 nm mesuré par diffusion dynamique de la lumière (DDL) ;
  - lesdites particules présentent une taille moyenne $\overline{D}_{DRX}$ inférieure ou égale à 7 nm mesurée par diffraction des rayons X (DRX) ; et
  - au moins 80% en nombre desdites particules présentent une taille $D_{MET}$ inférieure ou égale à 7 nm mesurée par microscopie électronique en transmission (MET).

Les valeurs préférentielles ou plus particulières des paramètres $\overline{D}_{DRX}$, $D_h$, $D_{MET}$ ainsi que du diamètre $\Phi_{50}$ et de l'indice $P_n$ données plus haut s'appliquent de même ici pour les dispersions DSP1 et DSP2 dans la mesure où ces valeurs vérifient aussi les limites données plus haut dans l'énoncé des caractéristiques de DSP1 et DSP2.

Les dispersions selon l'invention présentent une concentration massique en composé du fer qui peut être d'au moins 2%, plus particulièrement d'au moins 5%, cette concentration étant exprimée en masse de fer métal par rapport à la masse totale de la dispersion.

Cette concentration peut généralement aller jusqu'à 20%.

La teneur en fer peut être déterminée par toute technique connue de l'homme de l'art comme par la mesure par spectroscopie de fluorescence X appliquée directement sur la dispersion selon l'invention.

Une dispersion de particules de fer sous forme cristallisée peut être préparée selon un procédé comportant les étapes suivantes :

a) mise en contact, en phase aqueuse, d'une base et d'un mélange comprenant un sel de Fe(II) et un sel de Fe(III), selon un rapport molaire Fe(II)/Fe(III) compris de 0,45 à 0,55, de préférence environ égal à 0,5, avantageusement égal à 0,5, en maintenant le pH de la phase aqueuse à une valeur de pH supérieure à 8, ce par quoi on obtient un précipité ; et

b) mise en contact du précipité ainsi obtenu, éventuellement séparé de la phase aqueuse, avec une phase organique à base d'un solvant organique, en présence d'un agent amphiphile, ce par quoi on obtient la dispersion en phase organique.

Dans l'étape a) du procédé, on met en contact une base et un mélange comprenant un sel de Fe(II) et un sel

de Fe(III), selon un rapport molaire Fe(II)/Fe(III) compris de 0,45 à 0,55, de préférence environ égal à 0,5, avantageusement égal à 0,5, dans une phase aqueuse, typiquement une solution aqueuse de la base et des sels de fer.

Comme base, on peut utiliser notamment des composés de type hydroxyde. On peut citer les hydroxydes d'alcalins ou d'alcalino-terreux et l'ammoniaque. On peut aussi utiliser les amines secondaires, tertiaires ou quaternaires.

Comme sel de fer on peut utiliser tout sel soluble dans l'eau. A titre de sel de Fe(II), on peut mentionner le chlorure ferreux $FeCl_2$. A titre de sel de Fe(III), on peut mentionner le nitrate ferrique $Fe(NO_3)_3$.

Lors de l'étape a), la réaction ayant lieu entre le sel de Fe(II), le sel de Fe(III) et la base se fait généralement dans des conditions telles que le pH du mélange réactionnel formé reste supérieur ou égale à 8 lors de la mise en contact des sels de fer et de la base dans le milieu réactionnel.

De préférence, lors de l'étape a), le pH du mélange réactionnel est maintenu à une valeur supérieure ou égale à 8. Cette valeur de pH est typiquement comprise entre 9 et 13.

La mise en contact des sels de fer et de la base en phase aqueuse peut se faire par introduction d'une solution des sels de fer dans une solution contenant la base, dont le pH est d'au moins 8. On peut aussi introduire les sels de fer et la base dans une solution contenant des sels, à une concentration typiquement inférieure ou égale à $3 mol.L^{-1}$, comme par exemple du nitrate de sodium, et dont le pH est préalablement ajusté à une valeur supérieure ou égale à 8. Il est possible de réaliser la mise en contact en continu, la condition de pH étant réalisée en réglant les débits respectifs de la solution des sels de fer et de la solution contenant la base.

Il est possible, selon un mode de réalisation préféré de l'invention, de travailler dans des conditions telles que lors de la réaction entre les sels de fer et la base on maintienne constant le pH de la phase aqueuse. Par maintien constant du pH on entend une variation du pH de $\pm$ 0,2 unité de pH par rapport à la valeur fixée. De telles conditions peuvent être obtenues en ajoutant lors de la réaction entre les sels de fer et la base, par exemple lors de l'introduction de la solution des sels de fer dans la solution de la base, une quantité supplémentaire de base dans la phase aqueuse.

Dans le cadre de la présente invention, les inventeurs ont observé que la taille des particules peut être modulée en fonction du pH auquel est maintenue la phase aqueuse. Typiquement, et sans vouloir être lié à une théorie particulière, la taille des particules est d'autant plus faible que le pH de la phase aqueuse est élevé.

Pour les modes de réalisation particuliers de l'invention mentionnés plus haut et correspondant aux dispersions DSP1 et DSP2, la valeur de pH pour l'étape a) est d'au moins 11,5, plus particulièrement d'au moins 12.

La réaction de l'étape a) est généralement effectuée à température ambiante. Cette réaction peut avantageusement être réalisée sous atmosphère d'air ou d'azote ou d'un mélange azote-air.

A l'issue de la réaction de l'étape a), on obtient un précipité. Il est éventuellement possible de faire subir un mûrissement au précipité en le maintenant pendant un certain temps, par exemple quelques heures, dans la phase aqueuse.

Selon une première variante avantageuse du procédé selon l'invention, le précipité n'est pas séparé de la phase aqueuse à l'issue de l'étape a) et est laissé en suspension dans la phase aqueuse de la réaction de l'étape a).

Selon une autre variante du procédé selon l'invention, le procédé comporte, après l'étape a) et avant l'étape b), une étape $\alpha$) de séparation du précipité formé à l'issue de l'étape a) de la phase aqueuse.

Cette étape $\alpha$) de séparation est effectuée par tout moyen connu.

Le précipité séparé peut ensuite être lavé par de l'eau par exemple. De préférence, le précipité n'est soumis à aucune étape de séchage ou de lyophilisation ou toute opération de ce type.

Le précipité peut éventuellement être remis en suspension dans une seconde phase aqueuse.

Pour obtenir une dispersion en phase organique, lors de l'étape b), on met en contact le précipité obtenu à l'issue de l'étape a), qu'il soit séparé de la phase aqueuse ou non, avec la phase organique dans laquelle on souhaite obtenir la dispersion.

Cette phase organique est du type de celle qui a été décrite plus haut.

La mise en contact de l'étape b) se fait en présence de l'agent amphiphile précité, éventuellement après neutralisation de la suspension obtenue à l'issue de l'étape a).

De préférence, le rapport molaire entre le nombre de moles d'agent amphiphile et le nombre de moles de fer est compris de 0,2 à 1, préférentiellement comprise de 0,2 à 0,8.

La quantité de phase organique à incorporer est ajustée de manière à obtenir une concentration en oxyde telle que mentionnée plus haut.

L'ordre de l'introduction lors de l'étape b) des différents éléments de la dispersion est indifférent.

On peut mettre en contact simultanément le précipité obtenu, l'agent amphiphile, la phase organique, et éventuellement l'agent promoteur.

On peut également faire le prémélange de l'agent amphiphile, de la phase organique et éventuellement de l'agent promoteur.

La mise en contact entre le précipité et la phase organique peut se faire dans un réacteur qui est sous une atmosphère d'air, d'azote, ou un mélange d'air-azote.

Bien que la mise en contact entre le précipité et la phase organique puisse se faire à température ambiante,

environ 20°C, il est préférable d'opérer à une température choisie dans un intervalle allant de 30 °C à 150 °C, avantageusement entre 40 °C et 100°C.

Dans certains cas, en raison de la volatilité de la phase organique, il y a lieu de condenser ses vapeurs par refroidissement à une température inférieure à son point d'ébullition.

Le mélange réactionnel résultant du précipité, de la phase organique, de l'agent amphiphile et éventuellement de l'agent promoteur est maintenu sous agitation pendant toute la durée du chauffage.

Dans le cas de la première variante où le précipité n'a pas été séparé de la phase aqueuse à l'issue de l'étape a), lorsque l'on arrête le chauffage, on note la présence de deux nouvelles phases : une phase organique contenant la dispersion de particules, et une phase aqueuse résiduelle. On sépare ensuite la phase organique contenant la dispersion de particules et la phase aqueuse résiduelle selon les techniques classiques de séparation, comme par exemple la décantation ou la centrifugation.

Quelle que soit la variante du procédé, conformément à la présente invention, on obtient à l'issue de l'étape b) des dispersions organiques présentant les caractéristiques précitées.

La dispersion de la composition peut comprendre un mélange de particules constituées d'un composé du fer sous forme amorphe et de particules constituées d'un composé du fer sous forme cristallisée.

Dans le cas des mélanges, le rapport entre la masse de particules d'un composé du fer sous forme cristallisée de taille supérieure ou égale à 4 nm et la masse de particules d'un composé du fer sous forme amorphe de taille supérieure ou égale à 4 nm peut être compris entre 1:10 et 10:1.

Les dispersions comprenant des particules d'un composé du fer sous forme amorphe et des particules d'un composé du fer sous forme cristallisée peuvent être obtenues par mélange d'une première dispersion de particules d'un composé du fer sous forme amorphe dans une phase organique avec une seconde dispersion de particules d'un composé du fer sous forme cristallisée.

La dispersion de la composition de l'invention présente l'avantage d'être très stable. Les particules de la dispersion de l'invention ne sédimentent pas, et les dispersions ne décantent pas, même après plusieurs mois. En outre, elle peut présenter une bonne compatibilité avec les carburants de type gazole, notamment à base de biocarburants.

Selon une variante préférée, elle peut présenter en outre une activité catalytique élevée.

<u>Détergent à base de sel d'ammonium quaternaire de polyester</u>

Les détergents à base de sels d'ammonium quaternaires de polyester de l'invention comportent les sels quaternisés d'amine, d'amide ou d'ester de polyester.

Les détergents peuvent également être décrits comme sels quaternaires de polyester.

Les détergents de l'invention peuvent être décrits comme le produit de réaction de :

(a) un polyester contenant un groupement amine tertiaire; et
(b) un agent quaternisant convenable pour la conversion du groupement amine tertiaire en un azote quaternaire.

L'agent quaternisant peut être choisi dans le groupe constitué par les sulfates de dialkyle, les halogénures de benzyle, les carbonates à substitution hydrocarbyle; les époxydes d'hydrocarbyle en combinaison avec un acide ou des mélanges de ceux-ci.

<u>Polyester non quaternisé</u>

Le polyester contenant un groupement amine tertiaire utilisé dans la préparation des détergents de l'invention peut également être décrit comme un polyester non quaternisé contenant un groupement amine tertiaire.

Dans certains modes de réalisation le polyester est le produit de réaction d'un acide gras carboxylique contenant au moins un groupement hydroxyle et un composé ayant un atome d'oxygène ou d'azote capable de se condenser avec ledit acide et possédant en outre un groupement amine tertiaire.

Des acides carboxyliques gras convenables pouvant être utilisés dans la préparation des polyesters décrits ci-dessus peuvent être représentés par la formule :

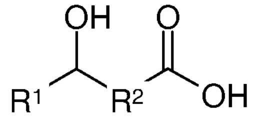

(I)

dans laquelle $R^1$ est un hydrogène ou un groupement hydrocarbyle contenant de 1 à 20 atomes de carbone et $R^2$ est

un groupement hydrocarbylène contenant de 1 à 20 atomes de carbone. Dans certains modes de réalisation, $R^1$ contient de 1 à 12, 2 à 10, 4 à 8 voire 6 atomes de carbone, et $R^2$ contient de 2 à 16, 6 à 14, 8 à 12, voire 10 atomes de carbone.

Dans certains modes de réalisation, l'acide gras carboxylique utilisé dans la préparation du polyester est l'acide 12-hydroxystéarique, l'acide ricinoléique, l'acide 12-hydroxydodécanoïque, l'acide 5-hydroxydodécanoïque, l'acide 5-hydroxydécanoïque, l'acide 4-hydroxydécanoïque, l'acide 10-hydroxyundécanoïque, ou des combinaisons de ceux-ci.

Dans certains modes de réalisation, notamment lorsque l'acide gras carboxylique est de formule (I), le composé ayant un atome d'oxygène ou d'azote capable de se condenser avec ledit acide et possédant en outre un groupement amine tertiaire est représenté par la formule :

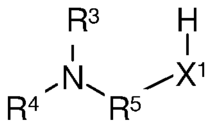

(II)

dans laquelle $R^3$ est un groupement hydrocarbyle contenant de 1 à 10 atomes de carbone; $R^4$ est un groupement hydrocarbyle contenant de 1 à 10 atomes de carbone; $R^5$ est un groupement hydrocarbylène contenant de 1 à 20 atomes de carbone; et $X^1$ est O ou $NR^6$ où $R^6$ est un hydrogène ou un groupement hydrocarbyle contenant de 1 à 10 atomes de carbone.

Dans certains modes de réalisation, $R^3$ contient de 1 à 6, 1 à 2, voire 1 atome de carbone, $R^4$ contient de 1 à 6, 1 à 2, voire 1 atome de carbone, $R^5$ contient de 2 à 12, 2 à 8 voire 3 atomes de carbone, et $R^6$ contient de 1 à 8, ou 1 à 4 atomes de carbone.

Dans certains parmi ces modes de réalisation, la formule (II) devient :

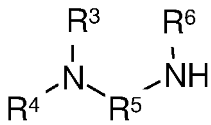

(II-a)ou

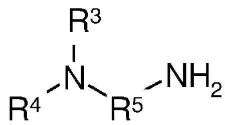

(II-b)

où les diverses définitions fournies ci-dessus s'appliquent toujours.

Des exemples de composés contenant de l'azote ou de l'oxygène et capables de se condenser avec les agents acylants, qui possèdent également un groupement amine tertiaire, ou de composés pouvant être alkylés en de tels composés, comportent, sans y être limités: 1-aminopipéridine, 1-(2-aminoéthyl)pipéridine, 1-(3-aminopropyl)-2-pipécoline, 1-méthyl-(4-méthylamino)pipéridine, 4-(1-pyrrolidinyl)pipéridine, 1-(2-aminoéthyl)pyrrolidine, 2-(2-aminoéthyl)-1-méthylpyrrolidine, N,N-diéthyléthylènediamine, N,N-diméthyléthylènediamine, N,N-dibutyléthylènediamine, N,N-diéthyl-1,3-diaminopropane, N,N-diméthyl-1,3-diaminopropane, N,N,N'-triméthyléthylènediamine, N,N-diméthyl-N'-éthyléthylènediamine, N,N-diéthyl-N'-méthyléthylènediamine, N,N,N'-triéthyléthylènediamine, 3-diméthylaminopropylamine, 3-diéthylaminopropylamine, 3-dibutylaminopropylamine, N,N,N'-triméthyl-1,3-propanediamine, N,N,2,2-tétraméthyl-1,3-propanediamine, 2-amino-5-diéthylaminopentane, N,N,N',N'-tétraéthyldiéthylènetriamine, 3,3'-diamino-N-méthyldipropylamine, 3,3'-iminobis(N,N-diméthylpropylamine), ou des combinaisons de ceux-ci. Dans de tels modes de réalisation, le détergent résultant comporte un sel d'amide d'ammonium quaternaire, c'est-à-dire un détergent contenant un groupement amide et un sel d'ammonium quaternaire.

Les composés contenant de l'azote ou de l'oxygène peuvent comporter en outre des composés hétérocycliques à substitution aminoalkyle, tels que 1-(3-aminopropyl)imidazole et 4-(3-aminopropyl)morpholine.

Un autre type de composés contenant de l'azote ou de l'oxygène capables de se condenser avec l'agent acylant et possédant un groupement amine tertiaire, dans certains modes de réalisation, après alkylation supplémentaire, comportent les alcanolamines comportant, sans y être limitées, la triéthanolamine, le N,N-diméthylaminopropanol, le N,N-diéthylaminopropanol, le N,N-diéthylaminobutanol, la triisopropanolamine, la 1-[2-hydroxyéthyl]pipéridine, le 2-[2-(diméthylamine)éthoxy]-éthanol, la N-éthyldiéthanolamine, la N-méthyldiéthanolamine, la N-butyldiéthanolamine, le N,N-diéthylaminoéthanol, le N,N-diméthylaminoéthanol, et le 2-diméthylamino-2-méthyl-1-propanol. Dans des modes de réalisation où des alcanolamines et/ou des matériaux similaires sont utilisés, le détergent résultant comporte un sel d'ester d'ammonium quaternaire, c'est-à-dire un détergent contenant un groupement ester et un sel d'ammonium quaternaire.

Dans un mode de réalisation, le composé contenant de l'azote ou de l'oxygène est la triisopropanolamine, la 1-[2-hydroxyéthyl]pipéridine, le 2-[2-(diméthylamino)éthoxy]éthanol, la N-éthyldiéthanolamine, la N-méthyldiéthanolamine, la N-butyldiéthanolamine, le N,N-diéthylaminoéthanol, le N,N-diméthylaminoéthanol, le 2-diméthylamino-2-méthyl-1-propanol, ou des combinaisons de ceux-ci.

Dans certains modes de réalisation, le composé ayant un atome d'oxygène ou d'azote capable de se condenser avec ledit acide et possédant en outre un groupement amine tertiaire comprend la N,N-diéthyléthylènediamine, la N,N-diméthyléthylènediamine, la N,N-dibutyléthylènediamine, le N,N-diméthyl-1,3-diaminopropane, le N,N-diéthyl-1,3-diaminopropane, le N,N-diméthylaminoéthanol, le N,N-diéthylaminoéthanol, ou des combinaisons de ceux-ci.

Le sel de polyester quaternisé peut être un sel d'amide de polyester quaternisé. Dans de tels modes de réalisation, le polyester contenant un groupement amine tertiaire utilisé pour préparer le sel de polyester quaternisé est un amide de polyester contenant un groupement amine tertiaire.

Dans certains parmi ces modes de réalisation, l'amine ou l'aminoalcool réagi avec un monomère, puis le matériau résultant est polymérisé avec du monomère supplémentaire, conduisant à l'amide de polyester désiré qui peut ensuite être quaternisé.

Dans certains modes de réalisation, le sel de polyester quaternisé comporte un cation représenté par la formule suivante :

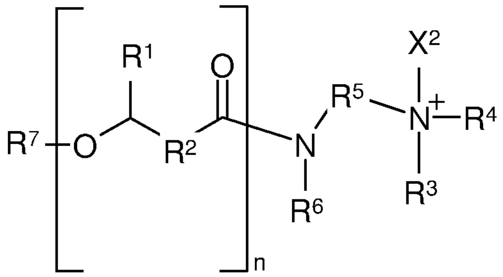

(III)

dans laquelle $R^1$ est un hydrogène ou un groupement hydrocarbyle contenant de 1 à 20 atomes de carbone et $R^2$ est un groupement hydrocarbylène contenant de 1 à 20 atomes de carbone; $R^3$ est un groupement hydrocarbyle contenant de 1 à 10 atomes de carbone; $R^4$ est un groupement hydrocarbyle contenant de 1 à 10 atomes de carbone; $R^5$ est un groupement hydrocarbylène contenant de 1 à 20 atomes de carbone; $R^6$ est un hydrogène ou un groupement hydrocarbyle contenant de 1 à 10 atomes de carbone; n est un nombre allant de 1 à 10; $R^7$ est hydrogène, un groupement hydrocarbonyle contenant de 1 à 22 atomes de carbone, ou un groupement hydrocarbyle contenant de 1 à 22 atomes de carbone; et $X^2$ est un groupement dérivé de l'agent quaternisant. Dans certains modes de réalisation, $R^6$ est un hydrogène.

Tel que ci-dessus, dans certains modes de réalisation, $R^1$ contient de 1 à 12, 2 à 10, 4 à 8 voire 6 atomes de carbone, et $R^2$ contient de 2 à 16, 6 à 14, 8 à 12, voire 10 atomes de carbone, $R^3$ contient de 1 à 6, 1 à 2, voire 1 atome de carbone, $R^4$ contient de 1 à 6, 1 à 2, voire 1 atome de carbone, $R^5$ contient de 2 à 12, 2 à 8 voire 3 atomes de carbone, et $R^6$ contient de 1 à 8, ou 1 à 4 atomes de carbone. Dans l'un quelconque de ces modes de réalisation, n peut aller de 2 à 9, ou de 3 à 7, et $R^7$ peut contenir de 6 à 22, ou de 8 à 20 atomes de carbone.

Dans ces modes de réalisation le sel de polyester quaternisé est essentiellement coiffé par un acide gras en $C_{1-22}$, ou $C_{8-20}$. Des exemples d'acides convenables comportent l'acide oléique, l'acide palmitique, l'acide stéarique, l'acide érucique, l'acide laurique, l'acide 2-éthylhexanoïque, l'acide 9,11-linoléique, l'acide 9,12-linoléique, l'acide 9,12,15-linolénique, l'acide abiétique, ou des combinaisons de ceux-ci.

Le poids moléculaire moyen en nombre (Mn) des sels de polyester quaternisé de l'invention peut aller de 500 à 3000, ou de 700 à 2500.

Le polyester utile dans la présente invention peut être obtenu par le chauffage d'un ou plusieurs acides hydroxycarboxyliques ou d'un mélange d'un acide hydroxycarboxylique et d'un acide carboxylique, éventuellement en présence d'un catalyseur d'estérification. Les acides hydroxycarboxyliques peuvent répondre à la formule HO-X-COOH dans laquelle X est un radical aliphatique divalent saturé ou insaturé contenant au moins 8 atomes de carbone et dans lequel il y a au moins 4 atomes de carbone entre les groupements hydroxy et acide carboxylique, ou à partir d'un mélange d'un tel acide hydroxycarboxylique et d'un acide carboxylique qui est dépourvu de groupements hydroxy. Cette réaction peut être effectuée à une température dans la plage allant de 160°C à 200°C, jusqu'à obtention du poids moléculaire souhaité. Le déroulement de l'estérification peut être suivi par la mesure de l'indice d'acide du produit, le polyester désiré, dans certains modes de réalisation, ayant un indice d'acide dans la plage allant de 10 à 100 mg de KOH/g ou dans la plage allant de 20 à 50 mg de KOH/g. La plage de valeur d'indice d'acide indiquée de 10 à 100 mg de KOH/g est équivalente à une plage de poids moléculaire moyen en nombre allant de 560 à 5600. L'eau formée dans la réaction d'estérification peut être éliminée du mélange réactionnel, et ceci peut être réalisé de manière convenable par le passage d'un courant d'azote au-dessus du mélange réactionnel ou en effectuant la réaction en présence d'un solvant, tel que le toluène ou le xylène, et en éliminant l'eau par distillation au fur et à mesure de sa formation.

Le polyester résultant peut ensuite être isolé de manière classique ; cependant, lorsque la réaction est effectuée

en présence d'un solvant organique dont la présence ne sera pas nuisible à l'application ultérieure, la solution résultante de polyester peut être utilisée.

Dans lesdits acides hydroxycarboxyliques, le radical représenté par X peut contenir de 12 à 20 atomes de carbone, éventuellement 8 et 14 atomes de carbone entre l'acide carboxylique et les groupements hydroxy. Dans certains modes de réalisation, le groupement hydroxy est un groupement hydroxy secondaire.

Des exemples spécifiques de tels acides hydroxycarboxyliques comportent l'acide ricinoléique, un mélange d'acides 9- et 10-hydroxystéariques (obtenus par sulfatation de l'acide oléique suivie d'une hydrolyse), et l'acide 12-hydroxystéarique, et notamment l'acide gras d'huile de ricin hydrogénée disponible dans le commerce qui contient, outre de l'acide 12-hydroxystéarique, des quantités mineures d'acide stéarique et d'acide palmitique.

Les acides carboxyliques pouvant être utilisés conjointement avec les acides hydroxycarboxyliques afin d'obtenir ces polyesters sont de préférence des acides carboxyliques de composés aliphatiques saturés ou insaturés, en particulier des acides alkyl- et alcényl-carboxyliques contenant une chaîne de 8 à 20 atomes de carbone. Comme exemples de tels acides, on peut citer l'acide laurique, l'acide palmitique, l'acide stéarique et l'acide oléique.

Dans un mode de réalisation, le polyester est dérivé d'acide 12-hydroxy-stéarique commercial ayant un poids moléculaire moyen en nombre d'environ 1600. Les polyesters tels que ceux-ci sont décrits en plus ample détail dans les descriptions des brevets britanniques n° 1373660 et 1342746.

Dans certains modes de réalisation, les composants utilisés pour préparer les détergents décrits ci-dessus sont substantiellement dépourvus, essentiellement dépourvus, voire entièrement dépourvus, d'agents acylants à substitution hydrocarbyle et ne contenant pas de polyester, où lesdits agents sont le produit de réaction d'un hydrocarbure à longue chaîne, généralement une polyoléfine réagie avec un réactif d'acide carboxylique mono-insaturé, tel que, (i) un acide dicarboxylique $\alpha,\beta$-mono-insaturé en $C_4$ à $C_{10}$ tel que l'acide fumarique, l'acide itaconique, l'acide maléique.; (ii) les dérivés de (i) tels que les mono- ou di-esters dérivés d'alcools en $C_1$ à $C_5$ ou les anhydrides de (i); (iii) un acide monocarboxylique en $C_3$ à $C_{10}$ $\alpha,\beta$-mono-insaturé tel que l'acide acrylique et l'acide méthacrylique; ou (iv) les dérivés de (iii), tels que les esters de (iii) dérivés d'alcools en $C_1$ à $C_5$ avec un composé quelconque contenant une liaison oléfinique représentés par la formule générale $(R^9)(R^{10})C=C(R^{11})(CH(R^7)(R^8))$ où chacun parmi $R^9$ et $R^{10}$ est indépendamment un hydrogène ou un groupement hydrocarboné; chacun parmi $R^{11}$, $R^7$ et $R^8$ est indépendamment un hydrogène ou un groupement hydrocarboné et préférablement au moins l'un d'eux est un groupement hydrocarbyle contenant au moins 20 atomes de carbone. Dans un mode de réalisation, l'agent acylant à substitution hydrocarbyle est un agent acylant dicarboxylique. Dans certains de ces modes de réalisation, l'agent acylant substitué par hydrocarbyle comprend de l'anhydride succinique de polyisobutylène. Dans encore d'autres modes de réalisation, les groupements hydrocarbyles présents dans les détergents de l'invention sont dépourvus de groupements polyisobutylène.

Par le terme « substantiellement dépourvus », on entend que les composants de la présente invention sont principalement composés de matériaux autres que les agents acylants à substitution hydrocarbyle décrits ci-dessus, de sorte que ces agents ne sont pas impliqués de manière significative dans la réaction et que les compositions de l'invention ne contiennent pas de quantités significatives de détergents dérivés de tels agents.

Dans certains modes de réalisation, les composants de l'invention, ou les compositions de l'invention, peuvent contenir moins de 10% en poids de ces agents, ou de détergents dérivés de ces agents. Dans d'autres modes de réalisation, la quantité maximale permise peut être de 5, 3, 2, 1 voire 0,5 ou 0,1% en poids. L'un des buts de ces modes de réalisation est de permettre l'exclusion d'agents tels que les anhydrides succiniques de polyisobutylène des réactions de l'invention et de permettre donc aussi l'exclusion de détergent à base de sel quaternisé dérivé d'agents tels que les anhydrides succiniques de polyisobutylène. Les détergents à base de sel quaternaire de polyester, ou hyper-dispersants, constituent le point central de la présente invention.

L'agent quaternisant

Les détergents à base de sel quaternisé de la présente invention sont formés lorsque les détergents non quaternisés décrits ci-dessus sont mis en réaction avec un agent quaternisant. Des agents quaternisants convenables comportent les sulfates de dialkyle, les halogénures de benzyle, les carbonates à substitution hycrocarbyle ; les époxydes d'hydrocarbyle en combinaison avec un acide ou des mélanges de ceux-ci.

Dans un mode de réalisation, l'agent quaternisant peut comporter les halogénures d'alkyle, tels que les chlorures, iodures ou bromures; les sulfonates d'alkyle; les sulfates de dialkyle, tels que le sulfate de diméthyle; les sultones; les phosphates d'alkyle, tels que les phosphates de $C_{1-12}$-trialkyle; les phosphates de di-$C_{1-12}$-alkyle; les borates; les borates de $C_{1-12}$ alkyle; les nitrites d'alkyle; les nitrates d'alkyle; les carbonates de dialkyle; les alcanoates d'alkyle; les dithiophosphates de O,O-di-$C_{1-12}$ alkyle; ou des mélanges de ceux-ci.

Dans un mode de réalisation, l'agent quaternisant peut être dérivé de sulfates de dialkyle tels que le sulfate de diméthyle, les N-oxydes, les sultones telles que la propane-et butane-sultone; les halogénures d'alkyle, acyle ou aralkyle tels que le chlorure, bromure ou iodure de méthyle et d'éthyle ou le chlorure de benzyle, et les carbonates à substitution hydrocarbyle (ou alkyle). Si l'halogénure d'alkyle est le chlorure de benzyle, le cycle aromatique est éventuellement substitué en outre par des groupements alkyle ou alcényle.

Les groupements hydrocarbyles (ou alkyles) des carbonates à substitution hydrocarbyle peuvent comprendre de 1 à 50, 1 à 20, 1 à 10 ou 1 à 5 atomes de carbone par groupement. Dans un mode de réalisation, les carbonates à substitution hydrocarbyle contiennent deux groupements hydrocarbyles pouvant être identiques ou différents. Des exemples de carbonates à substitution hydrocarbyle convenables comportent le carbonate de diméthyle ou de diéthyle.

Dans un autre mode de réalisation, l'agent quaternisant peut être un époxyde d'hydrocarbyle, tel que représenté par la formule suivante, en combinaison avec un acide :

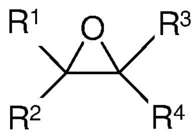

(VIII)

où $R^1$, $R^2$, $R^3$ et $R^4$ peuvent être indépendamment H ou un groupement hydrocarbyle contenant de 1 à 50 atomes de carbone. Des exemples d'époxydes d'hydrocarbyle comportent : l'oxyde d'éthylène, l'oxyde de propylène, l'oxyde de butylène, l'oxyde de styrène et des combinaisons de ceux-ci. Dans un mode de réalisation, l'agent quaternisant ne contient pas d'oxyde de styrène.

Dans certains modes de réalisation, l'acide utilisé avec l'époxyde d'hydrocarbyle peut être un composant séparé, tel que l'acide acétique. Dans d'autres modes de réalisation, par exemple lorsque l'agent acylant à base d'hydrocarbyle est un agent acylant dicarboxylique, aucun composant acide séparé n'est nécessaire. Dans de tels modes de réalisation, le détergent peut être préparé par la combinaison de réactifs qui sont essentiellement dépourvus, voire dépourvus, d'un composant acide séparé, tel que l'acide acétique, et dépendent à la place du groupement acide de l'agent acylant à base d'hydrocarbyle. Dans d'autres modes de réalisation, une petite quantité d'un composant acide peut être présente, mais à <0,2 voire <0,1 mole d'acide par mole d'agent acylant à base d'hydrocarbyle.

Dans certains modes de réalisation, l'agent quaternisant de l'invention ne contient aucun groupement substituant qui contient plus de 20 atomes de carbone. En d'autres termes, dans certains modes de réalisation, le groupement substituant à longue chaîne permettant au détergent résultant d'être soluble dans les solvants organiques et donc utile aux fins de la présente invention n'est pas fourni par l'agent quaternisant mais est plutôt apporté au détergent par les détergents non quaternisés décrits ci-dessus.

Dans certains des modes de réalisation, le rapport molaire de détergent ayant une fonctionnalité amine par rapport à l'agent quaternisant va de 1:0,1 à 2, ou de 1:1 à 1,5, ou de 1:1 à 1,3.

Exemple Q-1

Un matériau préparatoire d'amide de polyester non quaternisé est préparé par la réaction, dans un réacteur à double enveloppe équipé d'un agitateur, d'un réfrigérant, d'une pompe d'alimentation fixée à un tuyau de sub-addition (addition sous la surface du mélange réactionnel), d'une arrivée d'azote et d'un thermocouple/système de contrôle de la température, de 6 moles d'acide 12-hydroxystéarique et de 1 mole de diméthylaminopropylamine, où la réaction est effectuée à environ 130°C et maintenue pendant environ 4 heures. Le mélange réactionnel est ensuite refroidi jusqu'à environ 100°C et on ajoute du butylate de zirconium, selon une quantité telle que le matériau fasse 0,57% en poids du mélange réactionnel. Le mélange réactionnel est chauffé jusqu'à environ 195°C et maintenu pendant environ 12 heures. Le matériau préparatoire résultant est refroidi et récupéré.

Un détergent à base de sel d'amide de polyester quaternisé est préparé par la réaction, dans un réacteur à double enveloppe équipé d'un agitateur, d'un réfrigérant, d'une pompe d'alimentation fixée à un tuyau de sub-addition (addition sous la surface du mélange réactionnel), d'une arrivée d'azote et d'un thermocouple/système de contrôle de la température, de 600 grammes du matériau préparatoire d'amide de polyester non quaternisé décrit ci-dessus, de 120 grammes de 2-éthylhexanol, de 18,5 grammes d'acide acétique, et de 32,3 ml d'oxyde de propylène, où la réaction est effectuée à environ 90°C et l'oxyde de propylène est alimenté dans le réacteur sur environ 3,5 heures. Le mélange réactionnel est ensuite maintenu à température pendant environ 3 heures. 760 grammes de produit sont refroidis et récupérés, dont les analyses d'IAT (indice d'acide total), IRTF (Infra-Rouge à Transformée de Fourrier) et ESI-MS (Spectrométrie de Masse par electro- nébullisation) confirment qu'il est constitué d'environ 80% en poids de détergent à base de sel d'amide de polyester quaternisé, le matériau restant étant principalement de l'amide de polyester non quaternisé. Le matériau récupéré avait un IAT de 1,26 mg de KOH/gramme, un IBT (indice de base totale) de 23,82 mg de KOH/gramme, une viscosité cinématique à 100°C de 28,58 cSt (tel que mesuré par ASTM D445), un pic acétate par IR à 1574 $cm^{-1}$, et contient 1,22% d'azote.

Exemple Q-2

Un matériau préparatoire d'amide de polyester non quaternisé est préparé par la réaction, dans un réacteur à double enveloppe équipé d'un agitateur, d'un réfrigérant, d'une pompe d'alimentation fixée à un tuyau de sub-addition (addition sous la surface du mélange réactionnel), d'une arrivée d'azote et d'un thermocouple/système de contrôle de la température, 1300 grammes d'acide ricinoléique et 73,5 grammes de diméthylaminopropylamine où la réaction est effectuée à environ 130°C, l'amine est ajoutée goutte à goutte sur environ 8 minutes, et le mélange réactionnel maintenu pendant environ 4 heures. Le mélange réactionnel est ensuite refroidi jusqu'à environ 100°C et on ajoute 7,8 grammes de butylate de zirconium. Le mélange réactionnel est chauffé jusqu'à environ 195°C et maintenu pendant environ 17 heures. Le produit résultant est filtré, refroidi et récupéré. 1301 grammes de produit sont récupérés, ayant un IAT de 0 mg de KOH/gramme et présentant par IRTF un pic ester à 1732 $cm^{-1}$, un pic amide à 1654 $cm^{-1}$, mais aucun pic d'acide à 1700 $cm^{-1}$.

Un détergent à base de sel d'amide de polyester quaternisé est préparé par la réaction, dans un réacteur à double enveloppe équipé d'un agitateur, d'un réfrigérant, d'une pompe d'alimentation fixée à un tuyau de sub-addition (addition sous la surface du mélange réactionnel), d'une conduite d'azote et d'un thermocouple/système de contrôle de la température, de 600 grammes du matériau préparatoire d'amide de polyester non quaternisé décrit ci-dessus, de 123 grammes de 2-éthylhexanol, de 18,9 grammes d'acide acétique, et de 33,1 ml d'oxyde de propylène, où la réaction est effectuée à environ 90°C et l'oxyde de propylène est alimenté dans le réacteur sur environ 3,5 heures. Le mélange réactionnel est ensuite maintenu à température pendant environ 3 heures. 751 grammes de produit sont refroidis et récupérés, dont les analyses d'IAT, IRTF et ESI-MS confirment qu'il est constitué d'environ 70% en poids de détergent à base de sel d'amide de polyester quaternisé, le matériau restant étant principalement de l'amide de polyester non quaternisé. Le matériau récupéré avait un IAT de 0 mg de KOH/gramme, un IBT de 23,14 mg de KOH/gramme, une viscosité cinématique à 100°C de 47,0 cSt (tel que mesuré par ASTM D445), un pic acétate par IR à 1574 $cm^{-1}$.

Détergent oxygéné

Dans certains modes de réalisation, les compositions de la présente invention comprennent en outre un détergent oxygéné.

Le détergent oxygéné peut comprendre un composé hydrocarboné portant au moins deux substituants qui sont des fonctions carboxy sous forme d'acides ou au moins une fonction carboxy sous forme d'anhydride.

Dans certains modes de réalisation, l'additif détergent oxygéné est un composé hydrocarboné portant au moins deux substituants qui sont des fonctions carboxy sous forme d'acides ou d'anhydrides.

Dans d'autres modes de réalisation, l'additif détergent oxygéné est un agent d'acylation succinique à substitution hydrocarbonée.

Dans d'autres modes de réalisation, l'additif détergent oxygéné à substitution hydrocarbonée est un composé acide dimère.

Dans d'autres modes de réalisation encore, l'additif détergent oxygéné à substitution hydrocarbonée de la présente invention comprend une combinaison de deux ou plus de deux des additifs détergents oxygénés décrits dans cette rubrique.

Comme additifs détergents oxygénés à substitution hydrocarbonée convenables, on peut citer les acides dimères. Les acides dimères sont un type de polymère diacide dérivé d'acides gras et/ou de polyoléfines, notamment les polyalcènes décrits ici, qui contiennent une fonction acide.

Dans certains modes de réalisation, l'acide dimère utilisé dans la présente invention est dérivé de polyoléfines en $C_{10}$ à $C_{20}$, en $C_{12}$ à $C_{18}$ et/ou en $C_{16}$ à $C_{18}$.

Parmi ces détergents oxygénés à substitution hydrocarbonée, on peut citer les acides, halogénures, anhydrides succiniques, et leurs combinaisons.

Dans certains modes de réalisation, les agents sont des acides ou des anhydrides, et dans d'autres modes de réalisation les agents sont des anhydrides, et dans d'autres modes de réalisation encore les agents sont des anhydrides hydrolysés. Le composé hydrocarboné de l'additif hydrocarbure substitué et/ou le groupe hydrocarboné primaire de l'agent d'acylation succinique à substitution hydrocarbonée contient généralement une moyenne d'au moins 8, ou 30, ou 35 jusqu'à 350, ou jusqu'à 200, ou jusqu'à 100 atomes de carbone.

Dans un mode de réalisation, le groupe hydrocarboné est dérivé d'un polyalcène. Comme polyalcènes convenables, on peut citer les homopolymères et les interpolymères de monomères d'oléfines polymérisables de 2 à 16 ou à 6, ou à 4 atomes de carbone. Comme oléfines et polyoléfines convenables, on peut citer toutes celles décrites dans les rubriques qui précèdent.

Dans certains modes de réalisation, l'oléfine est une monooléfine telle que l'éthylène, le propylène, le 1-butène, l'isobutène et le 1-octène, ou un monomère polyoléfinique, tel qu'un monomère dioléfinique, tel que le 1,3-butadiène et l'isoprène.

Dans un mode de réalisation, l'interpolymère est un homopolymère. Un exemple d'un polymère est un polybutène. Dans un cas particulier, 50% du polybutène proviennent de l'isobutylène. Les polyalcènes sont préparés par des modes opératoires classiques.

Dans un mode de réalisation, les groupes hydrocarbonés sont dérivés de polyalcènes dont la valeur de Mn est d'au moins 1300, ou 1500, ou 1600 jusqu'à 5000, ou jusqu'à 3000, ou jusqu'à 2500, ou jusqu'à 2000, ou jusqu'à 1800, et le rapport Mw/Mn est de 1,5 ou 1,8, ou 2, ou jusqu'à 2,5 à 3,6, ou jusqu'à 3,2.

Dans certains modes de réalisation, le polyalcène est un polyisobutylène ayant une masse moléculaire de 800 à 1200.

Dans un autre mode de réalisation, les agents d'acylation à substitution hydrocarbonée et/ou succinique substitué sont préparés par réaction du polyalcène décrit ci-dessus avec un excès d'anhydride maléique pour donner des agents d'acylation succiniques substitués dans lesquels le nombre de groupes succiniques pour chaque équivalent de poids de groupe substituant est d'au moins 1,3, ou jusqu'à 1,5, ou jusqu'à 1,7, ou jusqu'à 1,8. Le nombre maximum ne dépassera généralement pas 4,5, ou jusqu'à 2,5, ou jusqu'à 2,1, ou jusqu'à 2,0. Le polyalcène peut ici être l'un quelconque de ceux décrits ci-dessus.

Dans un autre mode de réalisation, l'hydrocarbure et/ou le groupe hydrocarboné contient une moyenne de 8, ou 10, ou 12 jusqu'à 40, ou jusqu'à 30, ou jusqu'à 24, ou jusqu'à 20 atomes de carbone.

Dans un mode de réalisation, le groupe hydrocarboné contient une moyenne de 16 à 18 atomes de carbone.

L'oléfine, l'oligomère d'oléfine ou le polyalcène peut être mis à réagir avec le réactif carboxylique de telle sorte qu'il y ait au moins une mole de réactif carboxylique par mole d'oléfine, d'oligomère d'oléfine ou de polyalcène qui réagisse.

Comme exemples de brevets décrivant divers modes opératoires permettant de préparer des agents d'acylation utiles, on peut citer les brevets US 3 172 892, 3 215 707, 3 219 666, 3 231 587, 3 912 764, 4 110 349 et 4 234 435.

Dans certains modes de réalisation, les détergents oxygénés à substitution hydrocarbonée et/ou les agents d'acylation succiniques à substitution hydrocarbonée contiennent une fonction diacide.

Dans certains modes de réalisation, le groupe hydrocarboné de l'agent d'acylation succinique à substitution hydrocarbonée est dérivé de polyisobutylène et la fonction diacide de l'agent est dérivée de groupes acides carboxyliques, tels que d'un acide succinique à substitution hydrocarbonée.

Dans certains modes de réalisation, l'agent d'acylation à substitution hydrocarbonée comprend un ou plusieurs groupes anhydride succinique à substitution hydrocarbonée.

Dans certains modes de réalisation, l'agent d'acylation à substitution hydrocarbonée comprend un ou plusieurs groupes anhydrides succiniques à substitution hydrocarbonée hydrolysés.

Dans certains modes de réalisation, le détergent oxygéné est un composé polyisobutylène comportant un groupe de tête anhydride succinique ou acide succinique.

Le détergent oxygéné peut être un anhydride polyisobutylène succinique et/ou une version hydrolysée de celuici. La préparation de détergents oxygénés appropriés est décrite dans la demande de brevet international WO 2006/063161 A2.

A titre d'exemple non limitatif, les préparations de deux détergents oxygénés sont présentées ci-dessous.

Exemple O-1

Du Glissopal™ 1000 (18,18 kg) est chargé dans une cuve scellée à 100°C et agité. La cuve est chauffée à 167°C et un vide est appliqué. La cuve est ensuite pressurisée avec une atmosphère d'azote (1 bar) pendant qu'elle est chauffée à 175°C. Une fois que le produit a atteint 175°C, de l'anhydride maléique (2,32 kg) est ajouté à l'aide d'une pompe à seringue à double enveloppe chauffante (pompe ISCO) en l'espace d'environ 9 heures. La température réactionnelle est élevée lentement, pendant toute la durée de l'alimentation de l'anhydride maléique, de 175°C pour atteindre 225°C à la fin de la charge. La réaction est ensuite maintenue à 225°C pendant encore 10 heures. L'anhydride polyisobutylène succinique (PIBSA) résultante possède une viscosité cinématique à 100°C de 570 cSt (mm/s) et un indice d'acide total (TAN) de 127 mg KOH/g.

Exemple O-2

Le PIBSA de l'exemple O-1 (340 g) est chargé dans un réacteur et mélangé avec du Pilot™ 900 (60 g). Le contenu de la cuve est agité à 400 tours/min pendant 1 heure, puis chauffé à 90°C. La cuve est ensuite chargée d'azote pour fournir une atmosphère inerte. De l'eau (5,9 g) est ajoutée au mélange en l'espace de 10 minutes. Le mélange est ensuite agité pendant 2 heures. Le PIBSA hydrolysé résultant possède un indice d'acide total de 163 mg/KOH et une viscosité cinématique à 100°C de 500 mm/s (cSt). Le produit formé contient 85% en poids de produit hydrolysé et 15% en poids de Pilot® 900. Le rapport carbonyle/eau est de 0,5/1.

Lorsque les compositions détergentes de la présente invention contiennent à la fois un détergent de type sel d'ammonium quaternaire et un détergent oxygéné, le rapport pondéral du détergent de type sel d'ammonium quaternaire

au détergent oxygéné peut être de 1/10 à 10/1, 1/8 à 8/1, 1/1 à 8/1 ou 3/1 à 7/1, tous les rapports pondéraux étant calculés sur une base sans solvant. Dans d'autres modes de réalisation, le rapport pondéral peut être de 2/1 à 4/1.

Comme on l'entend ici, le terme "substituant hydrocarboné" ou "groupe hydrocarboné" est utilisé dans son sens ordinaire, qui est bien connu de l'homme du métier. Pour être plus précis, il désigne un groupe comportant un atome de carbone fixé directement sur le reste de la molécule et ayant un caractère principalement hydrocarboné. Comme exemples de groupes hydrocarbonés, on peut citer : les substituants hydrocarbonés, c'est-à-dire les substituants aliphatiques (par exemple alkyle ou alcényle), alicycliques (par exemple cycloalkyle, cycloalcényle) et les substituants aromatiques à substitution aromatique, aliphatique et alicyclique, ainsi que les substituants cycliques dans lesquels le noyau est complété par une autre partie de la molécule (par exemple deux substituants forment ensemble un noyau) ; les substituants hydrocarbonés substitués, c'est-à-dire les substituants contenant des groupes non hydrocarbonés qui, dans le contexte de cette invention, ne modifient pas la nature principalement hydrocarbonée du substituant (par exemple halogéno (tout spécialement chloro et fluoro), hydroxy, alcoxy, mercapto, alkylmercapto, nitro, nitroso et sulfoxy) ; les hétéro-substituants, c'est-à-dire les substituants qui, tout en ayant un caractère principalement hydrocarboné, dans le contexte de cette invention, contiennent autre chose que du carbone dans un noyau ou une chaîne composée par ailleurs d'atomes de carbone. Comme hétéroatomes, on peut citer le soufre, l'oxygène, l'azote, et cela couvre des substituants comme pyridyle, furyle, thiényle et imidazolyle. En général, pas plus de deux, de préférence pas plus d'un, substituant non hydrocarboné ne sera présent par groupe de 10 atomes de carbone dans le groupe hydrocarboné, et typiquement il n'y aura pas de substituants non hydrocarbonés dans le groupe hydrocarboné.

La présente invention concerne également un procédé de préparation de la composition selon l'invention, ledit procédé comprenant une étape de mise en contact et de mélange d'un détergent et d'une dispersion selon l'invention, ce par quoi on obtient la composition.

La composition de l'invention, c'est-à-dire la composition contenant l'additif d'aide à la régénération du FAP sous la forme d'une dispersion de particules d'un composé du fer et la composition détergente, peut être obtenue en mélangeant la composition détergente et la dispersion par tout moyen conventionnel permettant le mélange, ce mélange étant généralement obtenu par agitation à température proche de la température ambiante (de 15 à 30°C).

Le ratio pondéral entre la dispersion et la composition détergente peut varier grandement en fonction de différents paramètres comme les caractéristiques du moteur et de ses équipements notamment les injecteurs carburant, ses émissions polluantes, notamment la quantité de suies émises, l'architecture de la ligne d'échappement et de dépollution, notamment l'utilisation d'un FAP ou d'un Filtre Catalysé contenant un catalyseur et sa proximité du collecteur du moteur, les moyens permettant d'augmenter la température pour déclencher la régénération ou encore la zone géographique dans laquelle le véhicule circulera, cette dernière définissant la qualité du carburant qu'utilisera le véhicule.

Ce ratio pondéral entre la dispersion et la composition détergente peut typiquement varier entre 10/90 et 90/10, dans certains cas entre 20/80 et 80/20, et dans certains cas encore plus précis entre 40/60 et 60/40.

Dans la composition de la présente invention, la teneur en fer peut être comprise entre 0,05 % et 25%, plus particulièrement entre 2% et 15%, cette concentration étant exprimée en % poids de fer métal par rapport au poids total de la composition.

Les compositions selon la présente invention ont pour avantage de développer une viscosité cinématique modérée, notamment à basses températures (inférieures à 0°C).

Les dispersions organiques selon l'invention ont la particularité, une fois additivées au carburant, de ne pas réduire de façon conséquente la stabilité dudit carburant, en particulier lorsque celui-ci contient des fractions peu stables comme des fractions de biocarburants comme les esters méthyliques d'huiles végétales. La stabilité du carburant peut se mesurer au travers de sa résistance à l'oxydation.

Pour cela plusieurs types de test sont connus de la profession. On peut citer le test basé sur la norme NF EN 15751 (Carburants pour automobiles - Esters méthyliques d'acides gras (EMAG) et mélanges avec gazole - Détermination de la stabilité à l'oxydation par méthode d'oxydation accélérée) consistant à oxyder le carburant chauffé par un bullage d'air. Les vapeurs produites durant le processus d'oxydation sont condensées dans de l'eau. Une augmentation de la conductivité électrique de cette eau traduit une solubilisation de composés acides volatiles formés lors du processus d'oxydation du carburant et par là son oxydation. On parle alors de temps d'induction, temps représentant la durée de chauffage nécessaire pour voir apparaître une augmentation rapide de la conductivité électrique. Plus ce temps d'induction est élevée, plus le carburant résiste à l'oxydation. Ce test est aussi appelé test RANCIMAT.

Un autre type de test consiste à quantifier par dosage chimique (tel que selon la norme ISO 6619), l'augmentation d'acidité du carburant chauffé suite au bullage d'oxygène (test de vieillissement EN ISO 12205 (produits pétroliers - Détermination de la stabilité à l'oxydation des distillats moyens du pétrole (1996)). L'évolution de l'acidité est exprimée en fonction de la différence d'acidité ou d'$\Delta$TAN entre le carburant vieilli et non vieilli. Plus le $\Delta$TAN est élevé, plus le carburant a été oxydé.

L'invention concerne également un carburant additivé comprenant un carburant et d'une composition selon l'invention.

L'invention concerne également un procédé de préparation d'un carburant additivé selon l'invention, comprenant une étape de mise en contact et de mélange d'un carburant et d'une composition selon l'invention, ce par quoi on obtient le carburant additivé.

Les compositions selon l'invention peuvent être utilisées comme additif de carburant pour moteurs à combustion interne, plus particulièrement comme additif des gazoles pour moteur diesel ou autre moteur comme certains moteurs à essence émettant des suies ou particules carbonées, et par exemple comme additifs de biocarburants.

Elles peuvent plus généralement être utilisées comme additifs de combustion dans les combustibles ou carburants liquides des générateurs énergétiques tels que moteurs à combustion interne (moteurs à explosion), groupes électrogènes, brûleurs à mazout, ou propulseurs à réaction.

Les carburants additivés selon l'invention peuvent être utilisés en association avec un FAP ne contenant pas de catalyseur, ou bien avec un FAP contenant un catalyseur, comme un CSF.

La nature du catalyseur composant le CSF peut être de tout type notamment à base de métaux précieux comme le platine ou le palladium associé à différents matériaux support ou liant comme l'alumine. Des matériaux réductibles comme les oxydes à base de terres rares, comme l'oxyde de cérium ou les oxydes à base de manganèse peuvent être également associés.

Les compositions selon l'invention, ou Fuel Borne Catalyst (FBC), peuvent être additivées aux carburants selon tout moyen connu de l'homme de l'art, aussi bien par un dispositif de vectorisation embarqué sur le véhicule mais aussi additivé directement dans le carburant avant que celui-ci ne soit introduit sur le véhicule. Ce dernier cas peut être avantageusement utilisé dans le cas de flottes de véhicules équipés de FAP et disposant de leur propre station service pour refaire les pleins de carburant.

Les dispositifs embarqués sur le véhicule peuvent notamment être des dispositifs comprenant un réservoir, permettant d'embarquer un volume de la compositon selon l'invention et permettant de couvrir une certaine autonomie, ainsi qu'un moyen de vectorisation de la composition vers le carburant comme une pompe doseuse injectant une quantité définie de la dispersion dans le réservoir à carburant du véhicule et un outil de pilotage du moyen de vectorisation.

Le moteur peut être alimenté en continu par un carburant additivé en FBC, la concentration pouvant être stable ou variable dans le temps. Le moteur peut aussi être alimenté alternativement par un carburant additivé et non-additivé. La quantité de FBC à ajouter au carburant peut varier grandement en fonction de différents paramètres comme les caractéristiques du moteur et de ses équipements, ses émissions polluantes, notamment la quantité de suies émises, l'architecture de la ligne d'échappement et de dépollution, notamment l'utilisation d'un FAP ou d'un CSF contenant un catalyseur et sa promixité du collecteur du moteur, les moyens permettant d'augmenter la température pour déclencher la régénération ou encore la zone géographique dans laquelle le véhicule circulera, cette dernière définissant la qualité du carburant qu'utilisera le véhicule.

Le FBC peut aussi être injecté dans la ligne d'échappement en amont du FAP, de préférence par un moyen permettant de disperser au final les particules dans le lit de suies. Ce cas est particulièrement adapté au cas où la régénération du FAP se fait par injection directe de carburant dans la ligne d'échappement en amont du FAP, que ce carburant soit brûlé sur un catalyseur d'oxydation en amont du FAP ou bien par un brûleur ou par tout autre moyen.

De préférence, le carburant compris dans le carburant additivé est choisi parmi le groupe constitué des gazoles et des biocarburants.

Les carburants appropriés à la préparation d'un carburant additivé selon la présente invention comprennent notamment les carburants disponibles dans le commerce et, dans certains modes de réalisation, tous les carburants gazoles et/ou biocarburants disponibles dans le commerce.

Les carburants gazoles peuvent aussi être appelés carburants diesels.

Les biocarburants sont également appelés biofuels.

Les carburants appropriés à la mise en oeuvre de la présente invention ne sont pas trop limités, et sont généralement liquides à température ambiante, par exemple de 20 à 30°C.

Le carburant liquide peut être un carburant de type hydrocarbure, un carburant de type autre qu'un hydrocarbure, ou un de leurs mélanges.

Le carburant de type hydrocarbure peut être un distillat pétrolier, notamment une essence selon la définition donnée par la norme ASTM D4814, ou un carburant gazole, selon la définition donnée par la norme ASTM D975 ou la norme européenne EN590+A1.

Dans un mode de réalisation, le carburant liquide est une essence, et dans un autre mode de réalisation le carburant liquide est une essence sans plomb.

Dans un autre mode de réalisation, le carburant liquide est un carburant gazole.

Le carburant de type hydrocarbure peut être un hydrocarbure préparé par un procédé de transformation d'un gaz en liquide pour inclure, par exemple, des hydrocarbures préparés par un procédé tel que le procédé de Fischer-Tropsch.

Dans certains modes de réalisation, le carburant mis en oeuvre dans la présente invention est un carburant gazole, un biocarburant gazole, ou des combinaisons de ceux-ci.

Le carburant de type autre qu'un hydrocarbure peut être une composition contenant des atomes d'oxygène,

que l'on appelle souvent un produit d'oxygénation, qui comprend un alcool, un éther, une cétone, un ester d'un acide carboxylique, un nitroalcane, ou un de leurs mélanges. Le carburant de type autre qu'un hydrocarbure peut comprendre par exemple du méthanol, de l'éthanol, du méthyl-t-butyléther, de la méthyléthylcétone, des huiles et/ou des graisses trans-estérifiées d'origine végétale ou animale comme l'ester méthylique de colza et l'ester méthylique de soja, et le nitrométhane.

Les mélanges de carburants de type hydrocarbure et de type autre qu'un hydrocarbure peuvent comprendre, par exemple, de l'essence et du méthanol et/ou de l'éthanol, du carburant gazole et de l'éthanol, et du carburant gazole et une huile végétale trans-estérifiée comme l'ester méthylique de colza et d'autres carburants bio-dérivés.

Dans un mode de réalisation, le carburant liquide est une émulsion d'eau dans un carburant de type hydrocarbure, un carburant de type autre qu'un hydrocarbure, ou un de leurs mélanges.

Dans plusieurs modes de réalisation de cette invention, le carburant liquide peut avoir une teneur en soufre, sur une base pondérale, qui est de 5 000 ppm ou moins, de 1 000 ppm ou moins, de 300 ppm ou moins, de 200 ppm ou moins, de 30 ppm ou moins, ou de 10 ppm ou moins.

Le carburant liquide de l'invention est présent dans un carburant additivé selon l'invention en quantité prépondérante, c'est-à-dire généralement supérieure à 95% en poids, et dans d'autres modes de réalisation il est présent en quantité supérieure à 97% en poids, supérieure à 99,5% en poids, ou supérieure à 99,9% en poids.

Les carburants appropriés à la mise en oeuvre de la présente invention comprennent éventuellement un ou plusieurs additifs de performance supplémentaires, des solvants ou des diluants. Ces additifs de performance peuvent être de tout type et permettent par exemple l'amélioration de la distribution du carburant dans le moteur et/ou l'amélioration des performances du fonctionnement du moteur et/ou l'amélioration de la stabilité du fonctionnement du moteur.

On peut citer à titre d'exemple sans être limitatif les antioxydants comme le phénol stériquement encombré, les additifs détergents et/ou dispersants comme les détergents azotés ou les succinimides ou encore les agents améliorant l'écoulement à froid tel qu'un copolymère d'anhydride maléique et de styrène estérifié.

Les compositions de la présente invention peuvent en outre comprendre un ou plusieurs additifs de performance supplémentaires, des solvants ou des diluants.

Les additifs de performance supplémentaires peuvent comprendre : un antioxydant tel qu'un phénol à empêchement stérique ou un de ses dérivés et/ou une diarylamine ou un de ses dérivés ; un inhibiteur de corrosion ; et/ou un additif détergent/dispersant, autre que l'additif pour carburant de la présente invention, tel qu'une polyétheramine ou un détergent azoté, notamment, mais sans limitation, des détergents/dispersants PIB-amine et des détergents/dispersants succinimide.

Les additifs de performance supplémentaires peuvent aussi couvrir : un agent améliorant l'écoulement à froid tel qu'un copolymère d'anhydride maléique et de styrène estérifié et/ou un copolymère d'éthylène et d'acétate de vinyle ; un inhibiteur de mousse et/ou un agent antimousse tel qu'une huile de silicone ; un désémulsifiant tel qu'un alcool polyalcoxylé ; un agent d'onctuosité tel qu'un acide gras carboxylique ; un désactivateur de métaux tel qu'un triazole aromatique ou un de ses dérivés, notamment, mais sans limitation, le benzotriazole ; et/ou un additif contre la récession des sièges de soupape tel qu'un sel sulfosuccinate de métal alcalin.

La quantité totale combinée des composés additifs de performance supplémentaires présents, sur une base sans solvant/huile, peut s'échelonner de 0 ou 0,01% en poids à 65, 50, voire 25% en poids, ou de 0,01% en poids à 20% en poids de la composition. Même si un ou plusieurs des autres additifs de performance peuvent être présents, il est courant que les autres additifs de performance soient présents en différentes quantités les uns par rapport aux autres.

L'invention concerne également une méthode d'utilisation d'un moteur à combustion interne comprenant une étape d'acheminement audit moteur d'un carburant et d'une composition selon l'invention.

Dans un mode de réalisation, la composition de l'invention est combinée avec le carburant par addition directe et le carburant additivé est utilisé pour faire fonctionner un moteur équipé d'un système d'échappement avec un FAP.

Le carburant additivé contenant la composition de l'invention peut être contenu dans un réservoir de carburant, transmis au moteur où il est brûlé, et les particules d'oxyde de fer réduisent la température d'oxydation des suies recueillies dans le FAP.

Dans un autre mode de réalisation, on fait appel au mode opératoire ci-dessus, sauf que la composition de l'invention est maintenue à bord de l'appareil mû par le moteur (par exemple une automobile, un autobus, un camion, etc.) dans un réservoir à composition séparé du carburant. Dans ces modes de réalisation, la composition est combinée ou mélangée avec le carburant pendant le fonctionnement du moteur. Comme autres techniques, on peut aussi ajouter la composition de l'invention au carburant et/ou au réservoir de carburant, et/ou au niveau des dépôts de carburant avant de remplir le réservoir du véhicule motorisé.

La composition de l'invention peut être ajoutée au carburant en quantité telle que la teneur massique en fer est comprise de 1 à 50 ppm, et de préférence de 2 à 20 ppm en fer métal par rapport à la masse totale du carburant.

Lorsque l'invention est utilisée comme composition de carburant liquide pour un moteur à combustion interne, des moteurs à combustion interne appropriés couvrent les moteurs à allumage par étincelle et les moteurs à allumage par compression ; les cycles à 2 temps ou à 4 temps ; un carburant liquide obtenu par injection directe, injection indirecte,

injection par gicleur et carburateur ; les systèmes courants d'injecteur à rail et d'injecteur-pompe ; les moteurs pour véhicules légers (par exemple voiture de tourisme) et véhicules lourds (par exemple camion commercial) ; et les moteurs qui marchent avec des carburants de type hydrocarbure et de type autre qu'un hydrocarbure et des mélanges de ceux-ci. Les moteurs peuvent faire partie de systèmes à émission intégrée renfermant des éléments comme les systèmes EGR ; un après-traitement y compris un catalyseur trois voies, un catalyseur d'oxydation, des absorbeurs de NOx et des catalyseurs, des pièges à particules catalysés et non catalysés ; une distribution variable ; et une synchronisation de l'injection et une configuration du débit.

On sait que certains des produits décrits ci-dessus peuvent interagir dans la formulation finale, de sorte que les constituants de la formulation finale peuvent être différents de ceux qui sont ajoutés initialement. Les produits ainsi formés, notamment les produits formés à l'aide de la composition de la présente invention dans son utilisation envisagée, peuvent ne pas être facilement décrits. Néanmoins, toutes ces variantes et tous ces produits de réaction entrent dans le cadre de la présente invention ; la présente invention couvre la composition préparée par mélange des constituants décrits ci-dessus.

## EXEMPLES

<u>Exemple 1 :</u> Préparation des dispersions de particules de fer

<u>Exemple 1A :</u> Préparation d'une dispersion de particules de fer sous forme cristallisée

<u>Préparation de la solution de précurseurs de fer</u>

Un litre de solution est préparé de la manière suivante : 576 g de $Fe(NO_3)_3$ sont mélangés avec 99,4 g de $FeCl_2$, 4 $H_2O$. Le mélange est complété avec de l'eau distillée pour obtenir un litre de solution. La concentration finale de cette solution de précurseurs de fer est de 1,5 $mol.L^{-1}$ en Fe.

<u>Préparation de la solution de soude</u>

Une solution de NaOH à 6 $mol.L^{-1}$ est préparée de la manière suivante : 240 g de pastilles de soude sont dilués dans de l'eau distillée pour obtenir un litre de solution.

Dans un réacteur d'un litre équipé d'un système d'agitation, un pied de cuve composé de 400 mL de solution de nitrate de sodium $NaNO_3$ à 3 $mol.L^{-1}$ est introduit. Le pH de la solution est ajusté à 13 à l'aide de quelques gouttes de soude à 6 mol/L. La formation du précipité se fait par ajout simultané de la solution de précurseurs de fer et de la solution de soude préparées précédemment. Les débits d'introduction de ces deux réactifs sont ajustés de sorte que le pH soit maintenu constant et égal à 13 à température ambiante.

823,8 g de la solution obtenue par précipitation (soit 21,75 g d'un équivalent $Fe_2O_3$ ou encore 0,27 mol de Fe) préalablement neutralisée sont redispersés dans une solution contenant 24,1 g d'acide isostéarique (Prisorine 3501, coupe fournie par Croda) et 106,4 g d'Isopar L. La suspension est introduite dans un réacteur double enveloppe équipé d'un bain thermostaté et muni d'un agitateur. L'ensemble réactionnel est porté à 90°C pendant 4h.

Après refroidissement, on transfère le mélange dans une éprouvette. On observe une démixtion et on recueille une phase aqueuse de 500 mL et une phase organique de 100 mL. Cette dispersion organique possède une teneur massique en fer de 10%, exprimée en masse de fer métal par rapport à la masse totale de la dispersion recueillie. Le produit obtenu est stable pendant au moins un mois de stockage à température ambiante, aucune décantation n'étant observée.

<u>Exemple 1 B :</u> Préparation d'une dispersion de particules de fer sous forme cristallisée

On suit le même protocole que celui de l'Exemple 1A, à ceci près que, avant l'introduction des réactifs dans le pied de cuve, le pH de la solution de nitrate de sodium est ajusté à 11 et que, lors de la formation du précipité, les débits d'introduction de la solution de précurseurs de fer et de la solution de soude sont ajustés de sorte que le pH soit maintenu constant et égal à 11 à température ambiante.

<u>Exemple 1 C :</u> Préparation d'une dispersion de particules de fer sous forme amorphe

<u>Préparation d'une solution d'acétate de fer</u>

412,2 g de $Fe(NO_3)_3$, $5H_2O$ à 98% sont introduits dans un bécher et on y ajoute de l'eau distillée jusqu'à un volume de 2 litres. La solution est à 0,5M en Fe. On additionne goutte à goutte sous agitation et à température ambiante,

650 ml d'ammoniaque à 10% pour atteindre un pH de 7.

On centrifuge le mélange pendant 10 minutes à 4500 t/min puis on élimine les eaux mères. Le solide est remis en suspension dans de l'eau distillée à un volume total de 2650 mL. On agite le mélange pendant 10 min, puis on centrifuge pendant 10 min à 4500 t/min. On élimine les eaux mères et le solide est remis en suspension dans de l'eau distillée à un volume total de 2650 mL. On laisse 30 min sous agitation. On additionne alors 206 mL d'acide acétique concentré. On laisse une nuit sous agitation. La solution d'acétate de fer obtenue est limpide.

La formation du précipité est ensuite réalisée dans un montage en continu comprenant :

- un réacteur d'un litre équipé d'un agitateur à pales avec un pied de cuve initial constitué de 500 mL d'eau distillée, ce volume réactionnel étant conservé constant à l'aide d'une surverse; et
- deux flacons d'alimentation contenant d'une part la solution d'acétate de fer précédemment préparée et d'autre part, une solution d'ammoniaque à 10%.

On additionne la solution d'acétate de fer et la solution d'ammoniaque à 10%. Les débits des deux solutions sont fixés de telle manière que le pH soit maintenu constant et égal à 8.

Le précipité obtenu est séparé des eaux mères par centrifugation à 4500 t/min durant 10 min. 95,5 g d'hydrate sont recueillis à 21,5 % d'extrait sec (soit 20,0 g équivalent de $Fe_2O_3$ ou 0,25 mol en Fe) puis sont redispersés dans une solution contenant 39,2 g d'acide isostéarique et 80,8 g d'Isopar L. La suspension est introduite dans un réacteur double enveloppe équipé d'un bain thermostaté et muni d'un agitateur. L'ensemble réactionnel est porté à 90°C pendant 5h30.

Après refroidissement, on transfère dans une éprouvette. On observe une démixtion et on recueille une phase aqueuse de 50 mL et une phase organique de 220 mL. La dispersion organique recueillie possède une teneur massique en fer de 10%, exprimée en masse de fer métal par rapport à la masse totale de la dispersion recueillie.

<u>Exemple 2 :</u> Caractérisation des dispersions de particules de fer

<u>Exemple 2.1 :</u> Diffraction des rayons X (DRX)

L'analyse par DRX a été réalisée selon les indications données dans la description.

On constate que les pics des diffractogrammes de la dispersion de l'Exemple 1A et de la dispersion de l'Exemple 1 B correspondent bien aux pics de diffraction DRX caractéristiques de la phase cristallisée magnétite et/ou maghémite (fiche ICDD 01-088-0315).

Le diffractogramme de la dispersion de l'Exemple 1 C ne présente aucun pic de DRX significatif ce qui permet de conclure que la phase de fer est sous forme amorphe.

Le calcul de la taille de cristallite suivant la méthode présentée précédemment conduit à des tailles de cristallites respectivement de 4 nm pour l'Exemple 1A et 9 nm pour l'Exemple 1 B.

<u>Exemple 2.2 :</u> Microscopie électronique en transmission (MET)

L'analyse par MET a été réalisée selon les indications données dans la description.

Les caractéristiques issues de ce comptage en MET : pourcentage de particules inférieures à 7 nm, $\Phi_{50}$, indice de polydispersité $P_n$ sont reportées dans le Tableau 1.

Tableau 1

| | % de particules < 7 nm | $\Phi_{50}$ (nm) | $P_n$ |
|---|---|---|---|
| Exemple 1A | 95% | 3,8 nm | 0,35 |
| Exemple 1B | 72% | 5,7 nm | 0,35 |
| Exemple 1C | 98% | 3,5 nm | 0,22 |

<u>Exemple 2.3 :</u> Diffusion dynamique de la lumière (DDL)

L'analyse par DDL a été réalisée selon les indications données dans la description. Les diamètres hydrodynamiques moyens $D_h$ en intensité sont reportés dans le Tableau 2.

Tableau 2

| | $D_h$ |
|---|---|
| Exemple 1A | 11,6 |
| Exemple 1B | 22 |
| Exemple 1C | 13,5 |

Exemple 3 : Synthèse de compositions de détergent à base de sel d'amide de polyester quaternisé

Exemple 3A

Une composition de détergent à base d'un sel d'amide de polyester quaternisé est préparée par réaction d'un sel d'amide de polyester non quaternisé avec du 2-éthylhexanol, de l'acide acétique et de l'oxyde de propylène à environ 90°C selon les indications de l'exemple Q-1 décrit dans la description, à ceci près que davantage de solvant est introduit lors de la préparation. La composition de détergent préparée contient environ 75% en poids de détergent à base de sel d'amide de polyester quaternisé.

Exemple 3B

Une composition de détergent est préparée en mélangeant 35 parties en poids du composé de l'exemple 3A avec 9 parties en poids d'un détergent oxygéné, les parties en poids étant exprimées sans prendre en compte le solvant. Le mélange de ces composés est réalisé à température ambiante. Le détergent oxygéné, préparé essentiellement selon la méthode de l'exemple O-2, est le produit d'hydrolyse d'une anhydride succinique de polyisobutylène dérivée d'anhydride maléique et de polyisobutylène à forte teneur en vinyldiène de masse moléculaire moyenne en nombre de 1000.

Exemple 3C

Une composition de détergent est préparée selon la procédure de l'exemple 3A, à ceci près que le sel quaternisé d'amide de polyester est préparé selon l'exemple Q-2. La composition de détergent préparée contient environ 75% en poids de détergent à base de sel d'amide de polyester quaternisé.

Exemple 3D

Une composition de détergent est préparée selon la procédure 3B, à ceci près que le sel d'amide quaternaire de polyester est préparé selon l'exemple 3C.

Exemple 4 : Synthèse de compositions d'additifs contenant une dispersion de particules de fer et une composition de détergent à base de sel d'amide de polyester quaternisé

Trois additifs composés d'un mélange respectivement d'une des 3 dispersions de particules de fer de l'Exemple 1 (dispersions 1 A, 1B ou 1C) et de la composition de détergent de l'Exemple 3A sont préparés en mélangeant à température ambiante chaque élément dans des proportions contrôlées de façon à obtenir un additif contenant 5,56% poids de fer métal.
Le mélange est réalisé sous agitation à raison de 120 tours / minutes. Les conditions de mélange sont maintenues pendant 30 minutes et la qualité du mélange est contrôlée en mesurant par Fluorescence X que la teneur en fer dans le haut et dans le bas du mélange est identique.
On obtient ainsi les mélanges 4A, 4B et 4C.

Exemple 5 : Propriétés rhéologiques des additifs

Les propriétés rhéologiques de l'additif 4C ont été évaluées à l'aide d'un rhéomètre Kinexus de chez Malvern Instrument et comparées à celles de l'additif C de WO 2010/150040.
Les mesures ont été réalisées en système cône-plan (Cône : 1 °/50 mm et Plan : 65 mm) et sur une gamme de cisaillement allant de 0,1 à 1000 $s^{-1}$.
Les valeurs de viscosité newtoniennes fournies dans le Tableau 3 montrent que, pour des températures de

20°C et 40°C, l'additif 4C est moins visqueux que l'additif C de WO 2010/150040.

Tableau 3 : Viscosité Newtoniennes des additifs

| | Additif 4C | Additif C exemple 3 de WO 2010/150040 |
|---|---|---|
| 20°C | 44 cP | 47 cP |
| 40°C | 20 cP | 25 cP |

Exemple 6: Stabilité de la suspension colloïdale dans les carburants, notamment contenant des bio-fuels

Description des carburants utilisés :

Deux carburants ont été utilisés pour cette étude : un carburant répondant à la norme EN590 commercialisé par la société British Petroleum (BP) sous le nom de BP Ultimate et un carburant d'essai de type B10 contenant environ 11% de biocarburant.

Le Tableau 4 donne les principales caractéristiques du carburant B10. Ce carburant contient 10,8% volume de biocarburants sous la forme d'ester méthylique d'acides gras (dosage selon la norme EN14078, basé sur un dosage par spectroscopie Infra-rouge de la teneur en esters méthyliques d'acide gras (EMAG)) alors que le carburant BP Ultimate en contient 7 % volume (cf. Tableau 5).

Tableau 4 : Principales caractéristiques du carburant B10

| Carburant | | B10 |
|---|---|---|
| Composition | | |
| Aromatique | % masse | 24 |
| Poly aromatique | % masse | 4 |
| EMAG | % volume/volume | 10,8 |
| Soufre | Mg/kg | 5 |
| Résidu de carbone (sur le résidu 10% de distillation) | % masse/%masse | < 0,2 |
| Cuivre | mg/kg | 0 |
| Zinc | mg/kg | 0 |

Tableau 5 : Teneur en EMAG dans les carburants utilisés (dosage selon la norme EN14078)

| | %v/v EMAG |
|---|---|
| BP Ultimate | 7,0 |
| B10 | 10,8 |

Procédure de test de stabilité des suspensions colloïdales de fer dans les gazoles :

Pour chacun des carburants, on ajoute une quantité précise de l'additif 1C (non-conforme à l'invention) ou 4C (conforme à l'invention) à 250 mL de carburant :

Additif 1 C : 14,8 mg
Additif 4C : 26,6 mg

Ceci permet d'avoir, après homogénéisation, 4 carburants additivés à hauteur de 7 ppm poids en fer et éventuellement de détergent dans les proportions pondérales de l'additif utilisé pour les additifs 4C.

Le test consiste à chauffer le carburant additivé à 70°C pendant plusieurs jours et à suivre l'évolution de la teneur en fer dans ce carburant en fonction du temps de chauffage. Un volume de 20 mL de carburant est prélevé dans la zone surnageante, filtrée sur un filtre à 0,2 $\mu$m puis la teneur en fer du filtrat est mesurée par analyse de fluorescence X. On considère que la suspension colloïdale est stable tant que la teneur en fer dans le carburant n'est pas réduite de

plus de 10%.

Tableau 6 : Durée de stabilité (en jours) des additifs dans les carburants

| | + additif 1C | + additif 4C |
|---|---|---|
| BP Ultimate | 18 jours | > 50 jours* |
| B10 | 1 jour | 13 jours |
| * test stoppé à 50 jours ce qui permet de démontrer une stabilité supérieure à 50 jours | | |

On constate que quel que soit le carburant, la durée de stabilité de l'additif 4C, conforme à l'invention, est plus élevée que celle de l'additif 1 C, non-conforme à l'invention, qui ne contient pas de détergent.

Exemple 7 : Résistance à l'oxydation du gazole en présence d'additif

La résistance à l'oxydation des deux carburants de l'Exemple 6 a été mesurée avec et sans additivation de chacun des deux additifs 1 C et 4C. Le test consiste à faire buller de l'air dans le carburant maintenu à 110°C et à suivre sa dégradation par quantification des acides légers formés lors du test.

Le vieillissement est effectué selon la norme EN 15751 de 2009 (test Rancimat).

Brièvement, cette méthode consiste à envoyer un flux d'air sur un échantillon de gazole placé dans une cellule de réaction portée en température. Sous l'effet de la température et de l'oxygène de l'air, il y a oxydation. Les produits d'oxydation sont entrainés par le flux d'air vers une cellule de mesure où ils sont dissous dans la solution de mesure (eau déminéralisée). Cette cellule de mesure est équipée d'une électrode qui enregistre en continu la conductivité de la solution de mesure en fonction du temps. L'augmentation brutale de la conductivité (point d'inflexion de la courbe de conductivité) détermine le temps d'induction.

Le Tableau 7 indique que la dégradation du carburant, mesurée par le temps d'induction, est réduite lorsque l'additif 4C, contenant le détergent, est utilisé puisque le temps d'induction est supérieur à celui mesuré avec l'additif 1 C, non-conforme.

Tableau 7 : Temps d'induction (en heures) des différents carburants additivés

| | + additif 1 C | + additif 4C |
|---|---|---|
| BP Ultimate | 30,4 | 37,3 |
| B10 | 30,2 | 36,9 |

Exemple 8 : Test moteur d'efficacité en régénération du filtre à particules

Un moteur diesel fourni par le groupe Volkswagen (4 cylindres, 2 litres, turbocompresseur avec refroidissement d'air, 81 kW) a été utilisé sur un banc d'essai moteur. La ligne d'échappement montée en aval est une ligne commerciale composée d'un catalyseur d'oxydation contenant un washcoat à base de platine et d'alumine suivi d'un Filtre à Particules Catalysé (noté CSF plus bas) commercial contenant un washcoat à base de platine et d'alumine (volume total du filtre 3 L).

Le carburant utilisé est un carburant commercial répondant à la norme EN590 DIN 51628 contenant moins de 10 ppm de soufre et contenant 7% en volume d'EMAG ou Ester Méthylique d'Acide Gras.

Selon le cas, le carburant est additivé de l'additif 4C, ou non (contre-exemple). Dans le cas où le carburant est additivé, le carburant est additivé par la quantité d'additif 4C permettant d'atteindre différentes teneurs en fer métal exprimées sous la forme de ppm masse par rapport à la masse du carburant. La teneur en fer du carburant additivé est contrôlée par la technique de fluorescence X directement sur le liquide organique.

Le test est réalisé en deux étapes successives : une étape de chargement en suies du CSF, suivie d'une étape de régénération de celui-ci. Les conditions de ces deux étapes sont rigoureusement identiques pour les différents essais, mis à part le carburant utilisé (additivé ou non).

La phase de chargement est effectuée en faisant fonctionner le moteur à un régime de 3000 tours/min (trm) et en utilisant un couple de 45 Nm pendant approximativement 6 heures. Cette phase de chargement est stoppée quand 12 g de particules (ou suies) sont chargés dans le CSF. Pendant cette phase la température des gaz en amont du CSF est de 230 à 235°C. Dans ces conditions les émissions de particules sont d'environ 2 g/h.

Après cette phase de chargement, le CSF est démonté et pesé afin de contrôler la masse de particules chargées pendant cette phase.

Le CSF est ensuite remonté sur le banc et réchauffé par le moteur qui est remis 30 minutes dans les conditions

de fonctionnement du chargement (3000 trm / 45 Nm). Les conditions du moteur sont ensuite modifiées (couple 80 Nm / 2200 trm) et une post-injection est pilotée par l'unité électronique centrale du moteur (ECU), ce qui permet de monter la température en amont du CSF à 500°C et de démarrer sa régénération. Ces conditions sont maintenues pendant 60 minutes, ce temps étant décompté à partir du démarrage de la post-injection.

L'efficacité de régénération du CSF est mesurée par deux paramètres :

- la masse de suies brûlées pendant la régénération, calculée à partir des pesées du CSF avant chargement (Mo), après chargement (Mc) et en fin de régénération (Mr). Le % de suies brûlées au bout des 60 minutes de régénération est exprimé de la façon suivante :

$$\% \text{ suies brûlées totale} = (Mc-Mr)/(Mc-Mo)*100$$

- la masse de suies brûlées à chaque instant t de la régénération calculée à partir de l'évolution de la perte de charge du CSF à chaque instant DPt considérant que la perte de charge en début de régénération (DPc) correspond à celle du CSF chargé par la masse de suies (Mc-Mo) et la perte de charge au bout des 60 minutes (DPr) correspond à celle du CSF chargé par les suies n'ayant pas brûlées (Mr-Mo).

$$\% \text{ suies brûlées } (t) = ((DPc-DPt)/(Dpc-Dpr)) * \% \text{ suies brûlées totale}$$

De manière générale, plus ces paramètres sont élevés, plus la régénération est efficace.

Un test de référence (non-conforme à l'invention) a été réalisé en utilisant le carburant non additivé (test 1) lors du chargement du CSF et de sa régénération.

Deux tests (conformes à l'invention) ont été réalisés en utilisant un carburant additivé avec une quantité d'additif permettant d'atteindre une teneur en fer dans le carburant de 3 (test 2) ou 5 (test 3) ppm en fer.

Le Tableau 8 compare les résultats obtenus au cours de la régénération du CSF en exprimant le % de suies brûlées au total, c'est à dire en fin de période de régénération (1 heure) ou au début de la régénération (20 minutes).

Tableau 8: Résultats des essais moteurs de régénération du CSF utilisant différents carburants

| N° Test | ppm Fe | % suies brûlées au total à 1 heure | % suies brûlées 20 min |
|---|---|---|---|
| 1 | Non additivé | 60 | 39 |
| 2 | 3 | 87 | 86 |
| 3 | 5 | 90 | 88 |

On constate tout d'abord que l'ajout de la composition 4C au carburant (tests 2 et 3) permet d'augmenter grandement l'efficacité de la régénération puisque celle-ci est quasiment complète (86 à 88% de suies brûlées) au bout de 20 minutes à 500°C, la concentration en fer (3 à 5 ppm) a peu d'impact sur la régénération.

A l'inverse, lorsqu'un carburant non additivé est utilisé (test 1), la régénération n'est pas totale (60% au bout de 1 heure) et elle est aussi beaucoup plus lente (39% de régénération au bout de 20 minutes).

## Revendications

**1.** Composition comprenant une dispersion et un détergent comprenant un sel d'ammonium quaternaire de polyester, ladite dispersion comprenant :

- une phase organique ;
- au moins un agent amphiphile, et
- des particules dispersées dans la phase organique, de dimensions colloïdales, constituées d'un composé du fer.

**2.** Composition selon la revendication 1, comprenant en outre un additif détergent oxygéné.

**3.** Composition selon l'une quelconque des revendications 1 ou 2, dans laquelle le sel d'ammonium quaternaire de

polyester comprend le produit de réaction de :

(a) un polyester contenant un groupement amine tertiaire, comprenant le produit de réaction d'un acide gras carboxylique contenant au moins un groupement hydroxyle et un composé ayant un atome d'oxygène ou d'azote capable de se condenser avec ledit acide et possédant en outre un groupement amine tertiaire ; et
(b) un agent quaternisant convenable pour la conversion du groupement amine tertiaire en un azote quaternaire, ledit agent étant choisi dans le groupe constitué par les sulfates de dialkyle, les halogénures de benzyle, les carbonates à substitution hydrocarbyle; les époxydes d'hydrocarbyle en combinaison avec un acide ou des mélanges de ceux-ci.

**4.** Composition selon la revendication 3, dans laquelle l'acide gras carboxylique est représenté par la formule (I) :

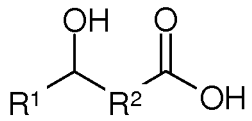

(I)

dans laquelle $R^1$ est un hydrogène ou un groupement hydrocarbyle contenant de 1 à 20 atomes de carbone et $R^2$ est un groupement hydrocarbylène contenant de 1 à 20 atomes de carbone, et
dans laquelle le composé ayant un atome d'oxygène ou d'azote capable de se condenser avec ledit acide et possédant en outre un groupement amine tertiaire est représenté par la formule (II) :

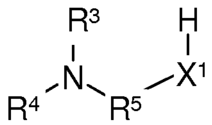

(II)

dans laquelle $R^3$ est un groupement hydrocarbyle contenant de 1 à 10 atomes de carbone; $R^4$ est un groupement hydrocarbyle contenant de 1 à 10 atomes de carbone; $R^5$ est un groupement hydrocarbylène contenant de 1 à 20 atomes de carbone; et $X^1$ est O ou $NR^6$ où $R^6$ est un hydrogène ou un groupement hydrocarbyle contenant de 1 à 10 atomes de carbone.

**5.** Composition selon la revendication 3, dans laquelle l'acide gras carboxylique est choisi parmi l'acide 12-hydroxystéarique, l'acide ricinoléique, l'acide 12-hydroxydodécanoïque, l'acide 5-hydroxydodécanoïque, l'acide 5-hydroxydécanoïque, l'acide 4-hydroxydécanoïque, l'acide 10-hydroxyundécanoïque, ou des combinaisons de ceux-ci ; et dans laquelle le composé ayant un atome d'oxygène ou d'azote capable de se condenser avec ledit acide et possédant en outre un groupement amine tertiaire est choisi parmi la N,N-diéthyléthylènediamine, la N,N-diméthyléthylènediamine, la N,N-dibutyléthylènediamine, le N,N-diméthyl-1,3-diaminopropane, le N,N-diéthyl-1,3-diaminopropane, le N,N-diméthylaminoéthanol, le N,N-diéthylaminoéthanol, ou des combinaisons de ceux-ci.

**6.** Composition selon l'une quelconque des revendications précédentes, dans laquelle le sel d'ammonium quaternaire de polyester comprend un sel d'amide de polyester quaternisé, dans lequel le polyester contenant un groupement amine tertiaire utilisé pour préparer le sel d'ammonium quaternaire de polyester est un amide de polyester contenant un groupement amine tertiaire.

**7.** Composition selon la revendication 6, dans laquelle le sel d'amide quaternaire de polyester comprend un cation représenté par la formule (III) :

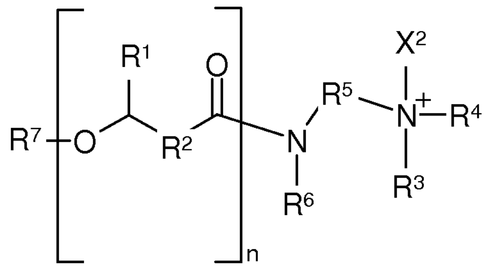

(III)

dans laquelle $R^1$ est un hydrogène ou un groupement hydrocarbyle contenant de 1 à 20 atomes de carbone et $R^2$ est un groupement hydrocarbylène contenant de 1 à 20 atomes de carbone;
$R^3$ est un groupement hydrocarbyle contenant de 1 à 10 atomes de carbone;
$R^4$ est un groupement hydrocarbyle contenant de 1 à 10 atomes de carbone;
$R^5$ est un groupement hydrocarbylène contenant de 1 à 20 atomes de carbone;
$R^6$ est un hydrogène ou un groupement hydrocarbyle contenant de 1 à 10 atomes de carbone; n est un nombre allant de 3 à 10;
$R^7$ est un hydrogène, un groupement hydrocarbonyle contenant de 1 à 22 atomes de carbone, ou un groupement hydrocarbyle contenant de 1 à 22 atomes de carbone; et
$X^2$ est un groupement dérivé de l'agent quaternisant.

**8.** Composition selon l'une quelconque des revendications 2 à 7, dans laquelle l'additif détergent oxygéné est un composé polyisobutylène comportant un groupe de tête anhydride succinique ou acide succinique.

**9.** Composition selon l'une quelconque des revendications précédentes, dans laquelle la dispersion comprend des particules constituées d'un composé du fer sous forme amorphe.

**10.** Composition selon la revendication 9, dans laquelle au moins 85%, plus particulièrement au moins 90% et encore plus particulièrement au moins 95% des particules dispersées dans la phase organique sont des particules individualisées.

**11.** Composition selon l'une quelconque des revendications 9 ou 10, dans laquelle les particules de la dispersion présentent un diamètre médian en nombre mesuré par microscopie électronique en transmission $\Phi_{50}$ compris entre 1 nm et 5 nm, plus particulièrement entre 3 nm et 4 nm.

**12.** Composition selon l'une quelconque des revendications 1 à 8, dans laquelle la dispersion comprend des particules constituées d'un composé du fer sous forme cristallisée.

**13.** Composition selon l'une quelconque des revendications précédentes, dans laquelle la phase organique de la dispersion est à base d'un hydrocarbure apolaire.

**14.** Composition selon l'une quelconque des revendications précédentes, dans laquelle l'agent amphiphile est un acide carboxylique qui comporte généralement de 10 à 50 atomes de carbone, de préférence de 10 à 25 atomes de carbone.

**15.** Composition selon l'une quelconque des revendications 12 à 14, dans laquelle la taille moyenne $\overline{D}_{DRX}$ des particules constituées d'un composé du fer sous forme cristallisée, mesurée par diffraction des rayons X, est inférieure ou égale à 12 nm.

**16.** Composition selon l'une quelconque des revendications 12 à 15, dans laquelle au moins 80% en nombre des particules présentent une taille $D_{MET}$ inférieure ou égale à 12 nm mesurée par microscopie en transmission, plus particulièrement inférieure ou égale 8 nm, de préférence inférieure ou égale à 7 nm, préférentiellement inférieure ou égale à 6 nm.

**17.** Composition selon l'une quelconque des revendications 12 à 16, dans laquelle les particules possèdent un diamètre médian en nombre mesuré par microscopie électronique en transmission $\Phi_{50}$ compris de préférence entre 3 nm et 12 nm, plus particulièrement entre 4 nm et 10 nm.

**18.** Composition selon l'une quelconque des revendications 12 à 17, dans laquelle les particules présentent un diamètre hydrodynamique $D_h$ inférieur ou égal à 50 nm, de préférence inférieur ou égale à 30 nm, préférentiellement inférieur ou égal à 20 nm, mesuré par diffusion dynamique de la lumière.

**19.** Composition selon l'une quelconque des revendications précédentes, dans laquelle la teneur en fer est comprise entre 0,05 % et 25%, plus particulièrement entre 2% et 15%, cette concentration étant exprimée en % poids de fer métal par rapport au poids total de ladite composition.

**20.** Composition selon l'une quelconque des revendications précédentes, comprenant en outre un désactivateur de métaux, un détergent/dispersant différent du détergent comprenant un sel d'ammonium quaternaire de polyester, un antioxydant, un inhibiteur de corrosion, un inhibiteur de mousse et/ou un agent antimousse, un désémulsifiant, un agent améliorant l'écoulement à froid, un agent lubrifiant, un additif contre la récession des sièges de soupape, ou des combinaisons de ceux-ci.

**21.** Utilisation d'une composition selon l'une quelconque des revendications 1 à 20, à titre d'additif de carburant pour moteurs à combustion interne, notamment pour l'aide à la régénération du filtre à particules.

**22.** Carburant additivé comprenant un carburant et une composition selon l'une quelconque des revendications 1 à 20.

**23.** Carburant additivé selon la revendication 22, dans lequel le carburant est choisi parmi le groupe constitué des gazoles et des biocarburants.

**24.** Carburant additivé selon l'une quelconque des revendications 22 ou 23, dans lequel la teneur massique en fer est comprise de 1 à 50 ppm, et de préférence de 2 à 20 ppm en fer métal par rapport à la masse totale du carburant.

**25.** Méthode de mise en oeuvre d'un moteur à combustion interne comprenant une étape d'acheminement audit moteur d'un carburant et d'une composition selon l'une quelconque des revendications 1 à 20.

## Patentansprüche

**1.** Zusammensetzung umfassend eine Dispersion und ein Detergens umfassend ein quartäres Polyesterammoniumsalz, wobei die Dispersion umfasst:

- eine organische Phase;
- mindestens ein amphiphiles Mittel und
- in der organischen Phase dispergierte Partikel kolloidalen Ausmaßes, bestehend aus einer Eisenverbindung.

**2.** Zusammensetzung gemäß Anspruch 1, umfassend des Weiteren ein oxygeniertes Detergensadditiv.

**3.** Zusammensetzung gemäß einem der Ansprüche 1 oder 2, wobei das quartäre Polyesterammoniumsalz das Produkt der Reaktion:

(a) eines Polyesters enthaltend eine tertiäre Amingruppe, umfassend das Produkt der Reaktion einer Carbonfettsäure enthaltend mindestens eine Hydroxylgruppe und einer Verbindung, die ein Sauerstoff- oder Stickstoffatom hat, das in der Lage ist, mit der Säure zu kondensieren, und die des Weiteren eine tertiäre Amingruppe besitzt;
und
(b) eines Quaternisierungsmittels geeignet für die Konversion der tertiären Amingruppe in einen quartären Stickstoff, wobei das Mittel ausgewählt ist aus der Gruppe bestehend aus Dialkylsulfaten, Benzylhalogeniden, kohlenwasserstoffsubstituierten Carbonaten; Kohlenwasserstoffepoxiden in Kombination mit einer Säure oder Mischungen davon
umfasst.

**4.** Zusammensetzung gemäß Anspruch 3, wobei die Carbonfettsäure durch die Formel (I) dargestellt ist:

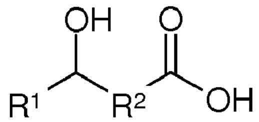

(I)

wobei $R^1$ ein Wasserstoff oder eine Hydrocarbylgruppe enthaltend 1 bis 20 Kohlenstoffatome ist und $R^2$ eine Hydrocarbylengruppe enthaltend 1 bis 20 Kohlenstoffatome ist und
wobei die Verbindung, die ein Sauerstoff- oder Stickstoffatom hat, das dazu in der Lage ist, mit der Säure zu kondensieren, und die des Weiteren eine tertiäre Amingruppe besitzt, durch die Formel (II) dargestellt ist:

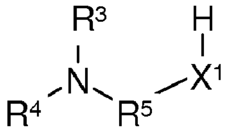

(II)

wobei $R^3$ eine Hydrocarbylgruppe enthaltend 1 bis 10 Kohlenstoffatome ist; $R^4$ eine Hydrocarbylgruppe enthaltend 1 bis 10 Kohlenstoffatome ist; $R^5$ eine Hydrocarbylengruppe enthaltend 1 bis 20 Kohlenstoffatome ist; und $X^1$ O oder $NR^6$ ist, wobei $R^6$ ein Wasserstoff oder eine Hydrocarbylgruppe enthaltend 1 bis 10 Kohlenstoffatome ist.

5. Zusammensetzung gemäß Anspruch 3, wobei die Carbonfettsäure ausgewählt ist aus 12-Hydroxystearinsäure, Ricinolsäure, 12-Hydroxydodecansäure, 5-Hydroxydodecansäure, 5-Hydroxydecansäure, 4-Hydroxydecansäure, 10-Hydroxyundecansäure oder Kombinationen davon; und
wobei die Verbindung, die ein Sauerstoff- oder Stickstoffatom hat, das dazu in der Lage ist, mit der Säure zu kondensieren, und die des Weiteren eine tertiäre Amingruppe besitzt, ausgewählt ist aus N,N-Diethylethylendiamin, N,N-Dimethylethylendiamin, N,N-Dibutylethylendiamin, N,N-Dimethyl-1,3-diaminopropan, N,N-Diethyl-1,3-diaminopropan, N,N-Dimethylaminoethanol, N,N-Diethylaminoethanol oder Kombinationen davon.

6. Zusammensetzung gemäß einem der voranstehenden Ansprüche, wobei das quartäre Polyesterammoniumsalz ein quaternisiertes Polyesteramidsalz umfasst, wobei der Polyester, der eine tertiäre Amingruppe enthält, verwendet zum Herstellen des quartären Polyesterammoniumsalzes, ein Polyesteramid enthaltend eine tertiäre Amingruppe ist.

7. Zusammensetzung gemäß Anspruch 6, wobei das quartäre Polyesteramidsalz ein Kation dargestellt furch die Formel (III) umfasst:

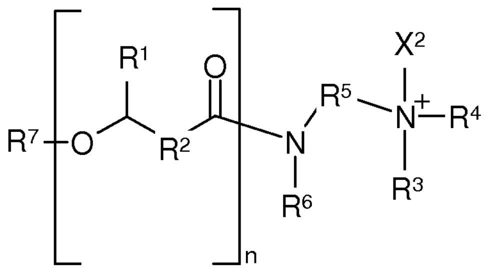

(III)

wobei $R^1$ ein Wasserstoff oder eine Hydrocarbylgruppe enthaltend 1 bis 20 Kohlenstoffatome ist und $R^2$ eine Hydrocarbylengruppe enthaltend 1 bis 20 Kohlenstoffatome ist;
$R^3$ eine Hydrocarbylgruppe enthaltend 1 bis 10 Kohlenstoffatome ist;
$R^4$ eine Hydrocarbylgruppe enthaltend 1 bis 10 Kohlenstoffatome ist;
$R^5$ eine Hydrocarbylengruppe enthaltend 1 bis 20 Kohlenstoffatome ist;
$R^6$ ein Wasserstoff oder eine Hydrocarbylgruppe enthaltend 1 bis 10 Kohlenstoffatome ist; n eine Zahl von 3 bis 10 ist;
$R^7$ ein Wasserstoff, eine Hydrocarbonylgruppe enthaltend 1 bis 22 Kohlenstoffatome oder eine Hydrocarbylgruppe enthaltend 1 bis 22 Kohlenstoffatome ist; und
$X^2$ eine Gruppe abgeleitet von dem Quaternisierungsmittel ist.

8. Zusammensetzung gemäß einem der Ansprüche 2 bis 7, wobei das oxygenierte Detergensadditiv eine Polyisobutylen-Verbindung mit einer Bernsteinsäureanhydrid- oder Bernsteinsäurekopfgruppe ist.

**9.** Zusammensetzung gemäß einem der voranstehenden Ansprüche, wobei die Dispersion Partikel bestehend aus einer amorphen Eisenverbindung umfasst.

**10.** Zusammensetzung gemäß Anspruch 9, wobei mindestens 85 %, insbesondere mindestens 90 % und noch spezieller mindestens 95 % der in der organischen Phase dispergierten Partikel individualisierte Partikel sind.

**11.** Zusammensetzung gemäß einem der Ansprüche 9 oder 10, wobei die Partikel der Dispersion einen mittleren Durchmesser $\phi_{50}$, gemessen durch Transmissionselektronenmikroskopie, zwischen 1 nm und 5 nm, insbesondere zwischen 3 nm und 4 nm aufweisen.

**12.** Zusammensetzung gemäß einem der Ansprüche 1 bis 8, wobei die Dispersion Partikel bestehend aus einer kristallisierten Eisenverbindung umfasst.

**13.** Zusammensetzung gemäß einem der voranstehenden Ansprüche, wobei die organische Phase der Dispersion auf einem unpolaren Kohlenwasserstoff basiert.

**14.** Zusammensetzung gemäß einem der voranstehenden Ansprüche, wobei das amphiphile Mittel eine Carbonsäure ist, die im Allgemeinen 10 bis 50 Kohlenstoffatome, vorzugsweise 10 bis 25 Kohlenstoffatome enthält.

**15.** Zusammensetzung gemäß einem der Ansprüche 12 bis 14, wobei die durchschnittliche Größe $\overline{D}_{DRx}$ der Partikel bestehend aus einer kristallisierten Eisenverbindung, gemessen durch Röntgenbeugung, kleiner als oder gleich 12 nm ist.

**16.** Zusammensetzung gemäß einem der Ansprüche 12 bis 15, wobei mindestens 80 % der Anzahl der Partikel eine Größe $D_{Met}$ von kleiner als oder gleich 12 nm aufweisen, gemessen durch Transmissionselektronenmikroskopie, insbesondere kleiner als oder gleich 8 nm, vorzugsweise kleiner als oder gleich 7 nm, noch bevorzugter kleiner als oder gleich 6 nm.

**17.** Zusammensetzung gemäß einem der Ansprüche 12 bis 16, wobei die Partikel einen mittleren Durchmesser $\phi_{50}$, gemessen durch Transmissionselektronenmikroskopie, zwischen vorzugsweise 3 nm und 12 nm, noch bevorzugter zwischen 4 nm und 10 nm besitzen.

**18.** Zusammensetzung gemäß einem der Ansprüche 12 bis 17, wobei die Partikel einen hydrodynamischen Durchmesser $D_h$ von kleiner als oder gleich 50 nm, vorzugsweise kleiner als oder gleich 30 nm, noch bevorzugter kleiner als oder gleich 20 nm aufweisen, gemessen durch dynamische Lichtstreuung.

**19.** Zusammensetzung gemäß einem der voranstehenden Ansprüche, wobei der Gehalt an Eisen zwischen 0,05 % und 25 %, noch spezieller zwischen 2 % und 15 % ist, wobei diese Konzentration in Gewichtsprozent Eisenmetall ausgedrückt ist, bezogen auf das Gesamtgewicht der Zusammensetzung.

**20.** Zusammensetzung gemäß einem der voranstehenden Ansprüche, umfassend des Weiteren einen Metalldeaktivator, ein Detergens/Dispergierungsmittel, das verschieden ist von dem Detergens, das ein quartäres Polyesterammoniumsalz umfasst, ein Antioxidans, einen Korrosionsinhibitor, einen Schauminhibitor und/oder ein Entschäumungsmittel, einen Demulgator, ein Kaltflussverbesserungsmittel, ein Schmiermittel, ein Additiv gegen die Rezession der Ventilsitze oder Kombinationen davon.

**21.** Verwendung einer Zusammensetzung gemäß einem der Ansprüche 1 bis 20 als Kraftstoffadditiv für Verbrennungsmotoren, insbesondere, um die Regeneration des Partikelfilters zu unterstützen.

**22.** Kraftstoffadditiv umfassend einen Kraftstoff und eine Zusammensetzung gemäß einem der Ansprüche 1 bis 20.

**23.** Kraftstoffadditiv gemäß Anspruch 22, wobei der Kraftstoff ausgewählt ist aus der Gruppe bestehend aus Diesel und Biotreibstoffen.

**24.** Kraftstoffadditiv gemäß einem der Ansprüche 22 oder 23, wobei der Massengehalt an Eisen zwischen 1 bis 50 ppm,

und vorzugsweise 2 bis 20 ppm Eisenmetall ist, bezogen auf die Gesamtmasse des Kraftstoffs.

**25.** Verfahren zur Verwendung eines Verbrennungsmotors umfassend einen Schritt des Beförderns des Motors eines Kraftstoffs und einer Zusammensetzung gemäß einem der Ansprüche 1 bis 20.

**Claims**

**1.** A composition comprising a dispersion and a detergent comprising a polyester quaternary ammonium salt, said dispersion comprising:

- an organic phase;
- at least one amphiphilic agent, and
- particles dispersed in the organic phase, with colloidal dimensions, consisting of an iron compound.

**2.** The composition according to claim 1, further comprising an oxygenated detergent additive.

**3.** The composition according to any of claims 1 or 2, wherein the polyester quaternary ammonium salt comprises the reaction product of:

(a) a polyester containing a tertiary amine group, comprising the reaction product of a carboxylic fatty acid containing at least one hydroxyl group and a compound having an oxygen or nitrogen atom capable of condensing with said acid and further having a tertiary amine group; and
(b) a quaternizing agent suitable for converting the tertiary amine group into a quaternary nitrogen, said agent being selected from the group formed by dialkyl sulfates, benzyl halides, carbonates with hydrocarbyl substitution, hydrocarbyl epoxides in combination with an acid or mixtures thereof.

**4.** The composition according to claim 3, wherein the carboxylic fatty acid is represented by the formula (I):

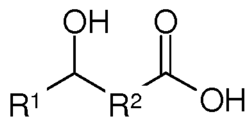
(I)

wherein $R^1$ is a hydrogen or a hydrocarbyl group containing from 1 to 20 carbon atoms, and $R^2$ is a hydrocarbylene group containing from 1 to 20 carbon atoms, and
wherein the compound having an oxygen or nitrogen atom capable of condensing with said acid and further having a tertiary amine group is represented by the formula (II):

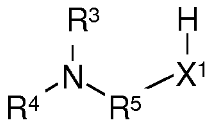
(II)

wherein $R^3$ is a hydrocarbyl group containing from 1 to 10 carbon atoms; $R^4$ is a hydrocarbyl group containing from 1 to 10 carbon atoms; $R^5$ is a hydrocarbylene group containing from 1 to 20 carbon atoms; and $X^1$ is O or $NR^6$ wherein $R^6$ is hydrogen or a hydrocarbyl group containing from 1 to 10 carbon atoms.

**5.** The composition according to claim 3, wherein the carboxylic fatty acid is selected from 12-hydroxystearic acid, ricinoleic acid, 12-hydroxydodecanoic acid, 5-hydroxydodecanoic acid, 5-hydroxydecanoic acid, 4-hydroxydecanoic acid, 10-hydroxyundecanoic acid, or combinations thereof; and
wherein the compound having an oxygen or nitrogen atom capable of condensing with said acid and further having a tertiary amine group is selected from N,N-diethylethylenediamine, N,N-dimethylethylenediamine, N,N-dibutylethylenediamine, N,N-dimethyl-1,3-diaminopropane, N,N-diethyl-1,3-diaminopropane, N,N-dimethylaminoethanol, N,N-diethylaminoethanol, or combinations thereof.

6. The composition according to any of the preceding claims, wherein the polyester quaternary ammonium salt comprises a quaternized polyester amide salt, wherein the polyester containing a tertiary amine group used for preparing the polyester quaternary ammonium salt is a polyester amide containing a tertiary amine group.

7. The composition according to claim 6, wherein the quaternary polyester amide salt comprises a cation represented by the formula (III):

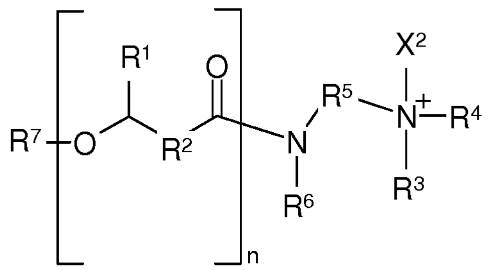

(III)

wherein $R^1$ is hydrogen or a hydrocarbyl group containing from 1 to 20 carbon atoms and $R^2$ is a hydrocarbylene group containing from 1 to 20 carbon atoms;
$R^3$ is a hydrocarbyl group containing from 1 to 10 carbon atoms;
$R^4$ is a hydrocarbyl group containing from 1 to 10 carbon atoms;
$R^5$ is a hydrocarbylene group containing from 1 to 20 carbon atoms;
$R^6$ is a hydrogen or a hydrocarbyl group containing from 1 to 10 carbon atoms; n is a number ranging from 3 to 10;
$R^7$ is a hydrogen, a hydrocarbonyl group containing from 1 to 22 carbon atoms, or a hydrocarbyl group containing from 1 to 22 carbon atoms; and
$X^2$ is a group derived from the quaternizing agent.

8. The composition according to any of claims 2 to 7, wherein the oxygenated detergent additive is a polyisobutylene compound including a succinic anhydride or succinic acid head group.

9. The composition according to any of the preceding claims, wherein the dispersion comprises particles consisting of an iron compound in amorphous form.

10. The composition according to claim 9, wherein at least 85%, more particularly at least 90% and even more particularly at least 95% of the particles dispersed in the organic phase are individualized particles.

11. The composition according to any of claims 9 or 10, wherein the particles of the dispersion have a number median diameter measured by transmission electron microscopy $\phi_{50}$ comprised between 1 nm and 5 nm, more particularly between 3 nm and 4 nm.

12. The composition according to any of claims 1 to 8, wherein the dispersion comprises particles consisting of an iron compound in crystallized form.

13. The composition according to any of the preceding claims, wherein the organic phase of the dispersion is based on an apolar hydrocarbon.

14. The composition according to any of the preceding claims, wherein the amphiphilic agent is a carboxylic acid which generally includes from 10 to 50 carbon atoms, preferably from 10 to 25 carbon atoms.

15. The composition according to any of claims 12 to 14, wherein the average size $\overline{D}_{XRD}$ of the particles consisting of an iron compound in crystallized form, measured by X-ray diffraction, is less than or equal to 12 nm.

16. The composition according to any of claims 12 to 15, wherein at least 80% by number of the particles have a size $D_{TEM}$ of less than or equal to 12 nm as measured by transmission microscopy, more particularly less than or equal to 8 nm, preferably less than or equal to 7 nm, preferentially less than or equal to 6 nm.

**17.** The composition according to any of claims 12 to 16, wherein the particles have a number median diameter $\Phi_{50}$ as measured by transmission electron microscopy preferably comprised between 3 nm and 12 nm, more particularly between 4 nm and 10 nm.

**18.** The composition according to any of claims 12 to 17, wherein the particles have a hydrodynamic diameter $D_h$ of less than or equal to 50 nm, preferably less than or equal to 30 nm, preferentially less than or equal to 20 nm, as measured by dynamic light scattering.

**19.** The composition according to any of the preceding claims, wherein the iron content is comprised between 0.05% and 25%, more particularly between 2% and 15%, this concentration being expressed in weight % of iron metal based on the total weight of said composition.

**20.** The composition according to any of the preceding claims, further comprising a deactivator of metals, a detergent/dispersant different from the detergent comprising a polyester quaternary ammonium salt, an antioxidant, a corrosion inhibitor, a foam inhibitor and/or an anti-foam agent, a de-emulsifier, a cold flow improver agent, a lubricating agent, an additive against valve seat recession, or combinations thereof.

**21.** The use of a composition according to any of claims 1 to 20, as a fuel additive for internal combustion engines, notably for assisting with regeneration of the particle filter.

**22.** An additived fuel comprising a fuel and a composition according to any of claims 1 to 20.

**23.** The additived fuel according to claim 22, wherein the fuel is selected from the group consisting of gasoils and biofuels.

**24.** The additived fuel according to any of claims 22 or 23, wherein the iron mass content is comprised from 1 to 50 ppm, and preferably from 2 to 20 ppm of iron metal based on the total mass of the fuel.

**25.** A method for applying an internal combustion engine comprising a step for delivering to said engine a fuel and a composition according to any of claims 1 to 20.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2009140190 A
- WO 2003053560 A
- GB 1373660 A
- GB 1342746 A
- US 3172892 A
- US 3215707 A
- US 3219666 A
- US 3231587 A
- US 3912764 A
- US 4110349 A
- US 4234435 A
- WO 2006063161 A2
- WO 2010150040 A